# EUROPEAN PATENT APPLICATION

(11) **EP 4 847 171 A1**
(43) Date of publication of application: **02.12.2026**
(21) Application number: 24926844.2
(22) Date of filing: 26.11.2024
(51) Int. Cl.: B23B 19/02, B23Q 1/70, B23P 25/00

(54) **ULTRASONIC MACHINING DEVICE WITH INNER AND OUTER RING DESIGN, ULTRASONIC SPINDLE, ULTRASONIC MACHINE TOOL AND ULTRASONIC DRILL**

(30) Priority: 01.03.2024 CN 202410235459
(71) Applicant: Conprofe Machine Tools Co., Ltd., Guangzhou, Guangdong 510663 (CN); Conprofe Technology Group Co., Ltd., Guangzhou, Guangdong 510663 (CN); Aenoasa Precision Tools Co., Ltd., Guangzhou, Guangdong 510663 (CN); Smartguy Intelligent Equipment Co., Ltd., Guangzhou, Guangdong (CN); Smartguy Intelligent Equipment Co., Ltd. Guangzhou Branch, Guangzhou, Guangdong 510663 (CN)
(72) Inventor: YAN, Bingjiang, Guangzhou, Guangdong 510663 (CN); LI, Weiqiu, Guangzhou, Guangdong 510663 (CN)
(74) Representative: Metida
(86) International application number: PCT/CN2024/134407
(87) International publication number: WO 2025/179986

(57) **Abstract**

The present disclosure provides a radial-nested-ring ultrasonic machining device, and an ultrasonic spindle, an ultrasonic machine tool, and an ultrasonic drill each provided with the radial-nested-ring ultrasonic machining device. The radial-nested-ring ultrasonic machining device includes a tool body (1), a wireless transmission mechanism (3), and an ultrasonic transducer (2), where the wireless transmission mechanism (3) includes a transmitting unit (31) and a receiving unit (32) arranged in a radially nested ring layout; and the ultrasonic transducer (2) is electrically connected to the receiving unit (32). Structural parameters of the transmitting unit (32) and the receiving unit (32) satisfy predetermined equations, such that apparent powers and applied peak currents of the transmitting unit (31) and the receiving unit (32) are matched with the respective structural parameters and performance. Along a radial circulation path of magnetic flux lines, the structures of the transmitting unit (31) and the receiving unit (32) can better transmit and receive the magnetic field energy, such that the energy of the wireless transmission mechanism (3) is better converted into mechanical vibration. This reduces the temperature and temperature rise rate of the transmitting unit (32) and the receiving unit (32) during operation, improves the continuous operation stability of the ultrasonic spindle, and improves the energy conversion efficiency.

## Description

### TECHNICAL FIELD

The present disclosure relates to the technical field of ultrasonic machining, and in particular to a radial-nested-ring ultrasonic machining device, an ultrasonic spindle, an ultrasonic machine tool, and an ultrasonic drill.

### BACKGROUND

Advanced materials represented by functional ceramics, optical crystals, high-strength and high-toughness alloys, and ceramic matrix composites exhibit excellent mechanical, physical, and chemical properties. Nevertheless, such materials are typical difficult-to-machine materials. In the cutting process, bottleneck problems including rapid wear of cutting tools, a short service life, poor machining quality, and low machining efficiency exist, which can hardly be thoroughly addressed with conventional mechanical machining processes.

Ultrasonic machining refers to a machining process that applies micrometer-scale ultrasonic vibrations to a machining tool or a workpiece, and controls vibration frequency, vibration amplitude, and vibration direction to achieve periodic high-frequency separation between the tool and the workpiece. Numerous research studies and practical applications have verified that in machining of new materials including difficult-to-machine metals, hard and brittle materials, and composite materials, ultrasonic machining technology delivers prominent advantages over conventional machining in restraining microcrack initiation, lowering cutting forces, prolonging tool life, removing workpiece burrs, and improving the machining efficiency.

Ultrasonic machining devices can be regarded as conventional tools fitted with an ultrasonic transmission mechanism and an ultrasonic transducer to enable high-frequency vibration of the tool during the machining process. Conventional ultrasonic transmission mechanisms usually adopt a radially nested ring layout, where the transmitting unit is sleeved on the outer periphery of the receiving unit. When an alternating current is applied to the transmitting unit, the transmitting unit generates an induced magnetic field. Magnetic flux lines circulate radially within the ultrasonic transmission mechanism to achieve inductive power coupling between the transmitting unit and the receiving unit, thereby providing an energy source for high-frequency vibration of the ultrasonic machining device. However, when the magnetic flux lines circulate radially within the ultrasonic transmission mechanism, they traverse the structures of the transmitting unit and the receiving unit and are attenuated by these structures, which ultimately impairs the output of the ultrasonic machining device. Accordingly, the structural layout of the ultrasonic transmission mechanism is closely related to the output of the ultrasonic machining device.

In conventional ultrasonic machining devices, the structural parameters of the ultrasonic transmission mechanism are not correlated with the apparent power thereof during operation. As a result, during operation of the conventional ultrasonic machining device, the apparent power can easily fail to match the structural parameters of the ultrasonic transmission mechanism, causing the energy output by the ultrasonic transmission mechanism to be excessively dissipated in the form of heat. Consequently, the temperature rise rate of the ultrasonic transmission mechanism gradually increases over time, which adversely impairs the operation stability, transmission efficiency, and service life of the ultrasonic transmission mechanism.

### SUMMARY

An objective of the present disclosure is to provide a radial-nested-ring ultrasonic machining device, which improves the operation stability and transmission efficiency, reduces the temperature rise rate of the ultrasonic transmission mechanism, and extends the service life.

To achieve the above objective, the present disclosure provides a radial-nested-ring ultrasonic machining device, including:
a tool body, where the tool body is internally provided with an ultrasonic transducer;
a wireless transmission mechanism, where the wireless transmission mechanism includes a transmitting unit and a receiving unit; the receiving unit is disposed on an outer peripheral side of the tool body, and the transmitting unit is disposed on an outer peripheral side of the receiving unit; the transmitting unit and the receiving unit are arranged opposite each other and form an air gap; the transmitting unit includes a transmitting coil and a transmitting magnet configured to generate a magnetic field based on a current in the transmitting coil; and the receiving unit includes a receiving coil and a receiving magnet configured to receive the magnetic field generated by the transmitting unit; and
the ultrasonic transducer, where the ultrasonic transducer is electrically connected to the receiving unit;
where, a frequency of an electrical signal input to the receiving unit is f Hz, an air-gap reluctance of the wireless transmission mechanism is R_{δ} H⁻¹, a reluctance of the transmitting unit is Rₜᵣₐ H⁻¹, and a reluctance of the receiving unit is R_{rec} H⁻¹;
a number of turns of the transmitting coil is Nₜᵣₐ, an apparent power of the transmitting unit is Qₜᵣₐ VA, and a peak current applied to the transmitting unit is Iₜᵣₐ A; and a following equation holds: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$
a number of turns of the receiving coil is N_{rec}, an apparent power of the receiving unit is Q_{rec} VA, and a peak current applied to the receiving unit is I_{rec} A; and a following equation holds: ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$
where, the number of turns satisfies: 2≤Nₜᵣₐ≤240 and 2≤N_{rec}≤240; and K₁ is a correction coefficient, 0.5≤K₁≤1.5.

In some embodiments of the present disclosure, the transmitting unit extends around the outer peripheral side of the tool body by an angle of θ radians, $\frac{π}{4} \leq θ \leq 2 π$.

In some embodiments of the present disclosure, in response to that θ=2π, an end surface of the transmitting magnet facing the receiving unit is provided with a first coil embedding groove disposed around the tool body; the transmitting coil is accommodated in the first coil embedding groove; the transmitting magnet includes a first annular side plate, a first annular top plate, and a first annular bottom plate; the first annular top plate is connected to a rear side of the first annular side plate, and the first annular bottom plate is connected to a front side of the first annular side plate; the first annular side plate, the first annular top plate, and the first annular bottom plate form the first coil embedding groove with an opening facing the receiving unit; and a thickness of the first annular top plate is T₂ₐ mm, a thickness of the first annular bottom plate is T_{2b} mm, an inner diameter of the transmitting magnet is D₄ mm, an outer diameter of the transmitting magnet is D₆ mm, the opening of the first coil embedding groove has a length of B₂ mm along an axial direction of the tool body, a depth of the first coil embedding groove is E₂ mm, and a diameter of the first coil embedding groove is D₅ mm;
an end surface of the receiving magnet facing the transmitting unit is provided with a second coil embedding groove disposed around the tool body; the receiving coil is accommodated in the second coil embedding groove; the receiving magnet includes a second annular side plate, a second annular top plate, and a second annular bottom plate; the second annular top plate is connected to a rear side of the second annular side plate, and the second annular bottom plate is connected to a front side of the second annular side plate; the second annular side plate, the second annular top plate, and the second annular bottom plate form the second coil embedding groove with an opening facing the transmitting unit; and a thickness of the second annular top plate is T₁ₐ mm, a thickness of the second annular bottom plate is T_{1b} mm, an inner diameter of the receiving magnet is D₁ mm, an outer diameter of the receiving magnet is D₃ mm, a diameter of the second coil embedding groove is D₂ mm, the opening of the second coil embedding groove has a length of B₁ mm along the axial direction of the tool body, and a depth of the second coil embedding groove is E₁ mm;
the transmitting magnet and the receiving magnet each have a relative permeability of u and a vacuum permeability of u₀ H/m; the second annular side plate has a magnetic-circuit area of S₁; and S₁ satisfies: ${S}_{1} = π \left[{\left(\frac{{D}_{2}}{2}\right)}^{2}-{\left(\frac{{D}_{1}}{2}\right)}^{2}\right]$
the reluctance R_{rec} of the receiving unit is expressed as follows: ${R}_{1} = \frac{{B}_{1}}{{S}_{1} \times u \times {u}_{0}} \times 1000$ ${R}_{2} = \frac{ln \left(\frac{{D}_{3}}{{D}_{1}}\right)}{u \times {u}_{0} \times 2 \times π \times {T}_{1 a}} \times 1000$ ${R}_{3} = \frac{ln \left(\frac{{D}_{3}}{{D}_{1}}\right)}{u \times {u}_{0} \times 2 \times π \times {T}_{1 b}} \times 1000$ ${R}_{rec} = {R}_{1} + {R}_{2} + {R}_{3}$
where, R₁ is a reluctance of the second annular side plate, R₂ is a reluctance of the second annular top plate, and R₃ is a reluctance of the second annular bottom plate;
the reluctance Rₜᵣₐ of the transmitting unit is expressed as follows: ${R}_{4} = \frac{{B}_{2}}{u \times {u}_{0} \times π \times \left[{\left(\frac{{D}_{6}}{2}\right)}^{2}-{\left(\frac{{D}_{5}}{2}\right)}^{2}\right]} \times 1000$ ${R}_{5} = \frac{ln \left(\frac{{D}_{6}}{{D}_{4}}\right)}{2 \times π \times u \times {u}_{0} \times {T}_{2 a}} \times 1000$ ${R}_{6} = \frac{ln \left(\frac{{D}_{6}}{{D}_{4}}\right)}{2 \times π \times u \times {u}_{0} \times {T}_{2 b}} \times 1000$ ${R}_{tra} = {R}_{4} + {R}_{5} + {R}_{6}$
where, R₄ is a reluctance of the first annular side plate, R₅ is a reluctance of the first annular top plate, and R₆ is a reluctance of the first annular bottom plate.

In some embodiments of the present disclosure, in response to that θ=2π, the wireless transmission mechanism has an air-gap reluctance of R_{δ} H⁻¹, an air-gap width of L mm, and a vacuum permeability of u₀ H/m; and the air-gap reluctance R_{δ} satisfies: ${R}_{δ} = {K}_{2} \times \left({R}_{7}+{R}_{8}\right)$
where, R₇ is an air-gap reluctance between the first annular top plate and the second annular top plate, R₈ is an air-gap reluctance between the first annular bottom plate and the second annular bottom plate, and K₂ is a reluctance correction coefficient, 0.2≤K₂≤3; and based on structural parameters of the transmitting magnet and the receiving magnet:
in response to that T₁ₐ<T₂ₐ, then T₇=T₁ₐ; in response to that T₁ₐ>T₂ₐ, then T₇=T₂ₐ; in response to that T_{1b}<T_{2b}, then T₈=T_{1b}; in response to that T_{1b}>T_{2b}, then T₈=T_{2b}; and R₇ and R₈ satisfy following equations: ${F}_{m} = 1 + \frac{L}{\sqrt{{10}^{- 3} \times {D}_{3} \times {T}_{m} \times π}} \times ln \left[\frac{{10}^{5} \times 2 \times \left({E}_{1}+{E}_{2}+L\right)}{L}\right]$ ${R}_{m} = \frac{1}{2 \times π \times {u}_{0} \times a \times \left({β}_{m}-{γ}_{m}\right)} \times ln \left(\frac{\left|\frac{L - {β}_{m}}{L - {γ}_{m}}\right|}{\left(\left|\frac{- {β}_{m}}{- {γ}_{m}}\right|\right)}\right) \times \frac{10}{{F}_{m}} \times 1000$
where, m is equal to 7 or 8, and parameters β, γ, and a satisfy: ${β}_{m} = \frac{- {b}_{m} + \sqrt{{b}_{m}^{2} - 4 {ac}_{m}}}{2 a}$ ${γ}_{m} = \frac{- {b}_{m} - \sqrt{{b}_{m}^{2} - 4 {ac}_{m}}}{2 a}$ $a = 2 \times k$ ${b}_{m} = k \times {D}_{3} + {T}_{m}$ ${c}_{m} = \frac{1}{2} \times {D}_{3} \times {T}_{m}$ $k = \frac{{T}_{2 a} - {T}_{1 a}}{2 \times L}$
in response to that T₁ₐ=T₂ₐ, then T₇=T₁ₐ; in response to that T_{1b}=T_{2b}, then T₈=T_{1b}; and R₇ and R₈ satisfy following equations: ${F}_{m} = 1 + \frac{L}{\sqrt{{10}^{- 3} \times {D}_{3} \times {T}_{m} \times π}} \times ln \left[\frac{{10}^{5} \times 2 \times \left({E}_{1}+{E}_{2}+L\right)}{L}\right]$ ${R}_{m} = \frac{1}{2 \times π \times {u}_{0} \times {T}_{m}} \times ln \left(\frac{{D}_{3} \times 0.5 + L}{{D}_{3} \times 0.5}\right) \times \frac{10}{{F}_{m}} \times 1000$
where, m is equal to 7 or 8.

In some embodiments of the present disclosure, in response to that $\frac{π}{4} \leq θ < 2 π$, an end surface of the transmitting magnet facing the receiving unit is provided with a first coil embedding groove disposed around the tool body; the transmitting coil is accommodated in the first coil embedding groove; and the transmitting magnet includes a connecting side plate, a connecting top plate, and a connecting bottom plate;
the connecting top plate is connected to a rear side of the connecting side plate; an end surface of the connecting top plate facing the receiving unit is provided with a top arc surface matched with the receiving unit; the connecting bottom plate is connected to a front side of the connecting side plate; an end surface of the connecting bottom plate facing the receiving unit is provided with a bottom arc surface matched with the receiving unit; and the top arc surface and the bottom arc surface enable the transmitting magnet to be disposed around the outer periphery of the receiving magnet and close to the receiving magnet;
the connecting side plate, the connecting top plate, and the connecting bottom plate form the first coil embedding groove with an opening facing the receiving unit; the transmitting coil is disposed around the connecting side plate and is partially embedded in the first coil embedding groove; and a length of the connecting side plate is smaller than a length of the connecting top plate, and the length of the connecting side plate is smaller than a length of the connecting bottom plate, such that in response to that the transmitting coil is wound on the connecting side plate, the transmitting coil is wrapped by the connecting top plate and the connecting bottom plate;
a thickness of the connecting side plate is A₂ mm, a length of the connecting side plate is H₃ mm, a thickness of the connecting top plate is T₂ₐ mm, a thickness of the connecting bottom plate is T_{2b} mm, a minimum value among distances from an outermost edge of the transmitting magnet to an inner arc surface of the transmitting magnet is B₃ mm, an inner diameter of the transmitting magnet is D₄ mm, the opening of the first coil embedding groove has a length of B₂ mm along an axial direction of the tool body, and a depth of the first coil embedding groove is E₂ mm; it should be noted that, since the transmitting unit is disposed on the outer peripheral side of the receiving unit, an inner side of the transmitting magnet refers to an end side of the transmitting magnet facing the receiving unit, and an outer side of the transmitting magnet refers to an end side of the transmitting magnet facing away from the receiving unit; and the inner arc surface of the transmitting magnet is formed on the inner side of the transmitting magnet, and is disposed close to the receiving unit, forming an air gap with the receiving unit;
an end surface of the receiving magnet facing the transmitting unit is provided with a second coil embedding groove disposed around the tool body; the receiving coil is accommodated in the second coil embedding groove; the receiving magnet includes a second annular side plate, a second annular top plate, and a second annular bottom plate; the second annular top plate is connected to a rear side of the second annular side plate, and the second annular bottom plate is connected to a front side of the second annular side plate; the second annular side plate, the second annular top plate, and the second annular bottom plate form the second coil embedding groove with an opening facing the transmitting unit; and a thickness of the second annular top plate is T₁ₐ mm, a thickness of the second annular bottom plate is T_{1b} mm, an inner diameter of the receiving magnet is D₁ mm, an outer diameter of the receiving magnet is D₃ mm, a diameter of the second coil embedding groove is D₂ mm, the opening of the second coil embedding groove has a length of B₁ mm along the axial direction of the tool body, and a depth of the second coil embedding groove is E₁ mm;
the transmitting magnet and the receiving magnet each have a relative permeability of u and a vacuum permeability of u₀ H/m; the second annular side plate has a magnetic-circuit area of S₁; and S₁ satisfies: ${S}_{1} = \frac{θ}{2} \times \left[{\left(\frac{{D}_{2}}{2}\right)}^{2}-{\left(\frac{{D}_{1}}{2}\right)}^{2}\right]$
the reluctance R_{rec} of the receiving unit is expressed as follows: ${R}_{1} = \frac{{B}_{1}}{{S}_{1} \times u \times {u}_{0}} \times 1000$ ${R}_{2} = \frac{ln \left(\frac{{D}_{3}}{{D}_{1}}\right)}{θ \times u \times {u}_{0} \times {T}_{1 a}} \times 1000$ ${R}_{3} = \frac{ln \left(\frac{{D}_{3}}{{D}_{1}}\right)}{θ \times u \times {u}_{0} \times {T}_{1 b}} \times 1000$ ${R}_{rec} = {R}_{1} + {R}_{2} + {R}_{3}$
where, R₁ is a reluctance of the second annular side plate, R₂ is a reluctance of the second annular top plate, and R₃ is a reluctance of the second annular bottom plate;
the reluctance Rₜᵣₐ of the transmitting unit is expressed as follows: ${R}_{4} = \frac{{B}_{2}}{u \times {u}_{0} \times {H}_{3} \times {A}_{2}} \times 1000$ ${R}_{5} = \frac{ln \left(\frac{{D}_{4} \times 0.5 + {B}_{3}}{{D}_{4} \times 0.5}\right)}{θ \times u \times {u}_{0} \times {T}_{2 a}} \times 1000$ ${R}_{6} = \frac{ln \left(\frac{{D}_{4} \times 0.5 + {B}_{3}}{{D}_{4} \times 0.5}\right)}{θ \times u \times {u}_{0} \times {T}_{2 b}} \times 1000$ ${R}_{tra} = {R}_{4} + {R}_{5} + {R}_{6}$
where, R₄ is a reluctance of the connecting side plate, R₅ is a reluctance of the connecting top plate, and R₆ is a reluctance of the connecting bottom plate.

In some embodiments of the present disclosure, in response to that $\frac{π}{4} \leq θ < 2 π$, the wireless transmission mechanism has an air-gap reluctance of R_{δ} H⁻¹, an air-gap width of L mm, and a vacuum permeability of u₀ H/m; and the air-gap reluctance R_{δ} satisfies: ${R}_{δ} = {K}_{2} \times \left({R}_{7}+{R}_{8}\right)$
where, R₇ is an air-gap reluctance between the connecting top plate and the second annular top plate, R₈ is an air-gap reluctance between the connecting bottom plate and the second annular bottom plate, and K₂ is a reluctance correction coefficient, 0.2≤K₂≤3. based on structural parameters of the transmitting magnet and the receiving magnet:
in response to that T₁ₐ<T₂ₐ, then T₇=T₁ₐ; in response to that T₁ₐ>T₂ₐ, then T₇=T₂ₐ; in response to that T_{1b}<T_{2b}, then T₈=T_{1b}; in response to that T_{1b}>T_{2b}, then T₈=T_{2b}; and R₇ and R₈ satisfy following equations: ${F}_{m} = 1 + \frac{L}{\sqrt{{10}^{- 3} \times 0.5 \times {D}_{3} \times {T}_{m} \times θ}} \times ln \left[\frac{{10}^{5} \times 2 \times \left({E}_{1}+{E}_{2}+L\right)}{L}\right]$ ${R}_{m} = \frac{1}{θ \times {u}_{0} \times a \times \left({β}_{m}-{γ}_{m}\right)} \times ln \left(\frac{\left|\frac{L - {β}_{m}}{L - {γ}_{m}}\right|}{\left(\left|\frac{- {β}_{m}}{- {γ}_{m}}\right|\right)}\right) \times \frac{7}{{F}_{m}} \times 1000$
where, m is equal to 7 or 8, and parameters β, γ, and a satisfy: ${β}_{m} = \frac{- {b}_{m} + \sqrt{{b}_{m}^{2} - 4 {ac}_{m}}}{2 a}$ ${γ}_{m} = \frac{- {b}_{m} - \sqrt{{b}_{m}^{2} - 4 {ac}_{m}}}{2 a}$ $a = 2 \times k$ ${b}_{m} = k \times {D}_{3} + {T}_{m}$ ${c}_{m} = \frac{1}{2} \times {D}_{3} \times {T}_{m}$ $k = \frac{{T}_{2 a} - {T}_{1 a}}{2 \times L}$
in response to that T₁ₐ=T₂ₐ, then T₇=T₁ₐ; in response to that T_{1b}=T_{2b}, then T₈=T_{1b}; and R₇ and R₈ satisfy following equations: ${F}_{m} = 1 + \frac{L}{\sqrt{{10}^{- 3} \times 0.5 \times {D}_{3} \times {T}_{m} \times θ}} \times ln \left[\frac{{10}^{5} \times 2 \times \left({E}_{1}+{E}_{2}+L\right)}{L}\right]$ ${R}_{m} = \frac{1}{θ \times {u}_{0} \times {T}_{m}} \times ln \left(\frac{{D}_{3} \times 0.5 + L}{{D}_{3} \times 0.5}\right) \times \frac{7}{{F}_{m}} \times 1000$
where, m is equal to 7 or 8.

In some embodiments of the present disclosure, the air-gap width is L mm, 0.1≤L≤3.

In some embodiments of the present disclosure, an outer periphery of the tool body extends radially outward to form a first limiting member; the receiving unit includes a rear end surface abutting against a front end surface of the first limiting member, and further includes a front end surface connected to a second limiting member; the second limiting member is disposed around the tool body; and a second accommodating groove for accommodating the receiving unit is formed between the first limiting member and the second limiting member.

In some embodiments of the present disclosure, the wireless transmission mechanism includes a transmitting mount; the transmitting mount is disposed on the outer peripheral side of the tool body; an end surface of the transmitting mount facing the tool body is provided with a first accommodating groove; and the transmitting magnet is accommodated in the first accommodating groove.

**In** some embodiments of the present disclosure, the radial-nested-ring ultrasonic machining device further includes a horn, where the ultrasonic transducer includes a piezoelectric vibrator, a screw rod, and a rear cover; the screw rod is disposed in the tool body and extends along the axial direction of the tool body; a rear end of the horn is fixedly connected to the screw rod; the piezoelectric vibrator is sleeved on the screw rod; and the rear cover is threadedly connected to the screw rod and cooperates with a rear end surface of the horn to limit the piezoelectric vibrator.

**In** some embodiments of the present disclosure, the tool body is internally provided with a mounting cavity; and the ultrasonic transducer is disposed in the mounting cavity.

**In** some embodiments of the present disclosure, the radial-nested-ring ultrasonic machining device further includes a collet sleeved on an outer periphery of a machining tool, and a nut, where a front end of the horn is provided with an insertion bore extending rearward; an inner peripheral surface of the insertion bore is tapered with a diameter gradually decreasing from front to rear; the collet is insertable together with the machining tool into the insertion bore; and the nut is configured to be threadedly connectable to the horn, and abuts against the collet to secure the machining tool.

In some embodiments of the present disclosure, the collet includes a conical section cooperating with the insertion bore; the collet is provided with a plurality of first deformation grooves arranged at intervals along a circumferential direction of the collet; and the plurality of first deformation grooves extend to or through the conical section; and
the plurality of first deformation grooves penetrate through an outer side surface and an inner side surface of the collet; the plurality of first deformation grooves extend rearward from a front end surface of the collet along an axial direction of the collet, pass through the conical section, and extend toward a rear end surface of the collet; and a first gap is provided between a rear groove surface of each of the plurality of first deformation grooves and the rear end surface of the collet.

In some embodiments of the present disclosure, the collet is provided with a plurality of second deformation grooves arranged at intervals along the circumferential direction of the collet; the plurality of second deformation grooves extend to or through the conical section; and the plurality of second deformation grooves are spaced from and staggered with the plurality of first deformation grooves;
a second gap is provided between a front groove surface of each of the plurality of second deformation grooves and the front end surface of the collet; and a rear groove surface of each of the plurality of second deformation grooves is flush with the rear end surface of the collet.

Based on the above objective, the present disclosure further provides an ultrasonic spindle, including a first rotary output unit, a machining tool, and the radial-nested-ring ultrasonic machining device, where a rear end of the tool body is assembled to the first rotary output unit; and the machining tool is assembled to the ultrasonic transducer.

Based on the above objective, the present disclosure further provides an ultrasonic machine tool, including a machine tool body and the above ultrasonic spindle, where the ultrasonic spindle is mounted on the machine tool body.

Based on the above objective, the present disclosure further provides an ultrasonic drill, including a housing, a second rotary output unit, a machining tool, and the radial-nested-ring ultrasonic machining device, where a front end surface of the housing is provided with an accommodating cavity extending rearward; a rear end of the tool body is accommodated in the accommodating cavity and connected to an output end of the second rotary output unit; and the tool body is connected to the housing via the bearing; the radial-nested-ring ultrasonic machining device is disposed in the accommodating cavity and connected to the housing; and the machining tool is connected to the ultrasonic transducer.

### Embodiments of the present disclosure have the following technical effects:

In the radial-nested-ring ultrasonic machining device provided by the present disclosure, by means of the receiving unit disposed on the outer peripheral side of the tool body and the transmitting unit disposed on the outer peripheral side of the receiving unit, magnetic flux lines circulate radially within the wireless transmission mechanism, and the structural parameters of the receiving unit and the transmitting unit respectively satisfy the following equations: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$ ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$

Thus, when the ultrasonic machining device is in operation, with the receiving unit operating at the apparent power Q_{rec} and the transmitting unit operating at the apparent power Qₜᵣₐ, the peak currents applied to the transmitting unit and the receiving unit, as well as the apparent powers thereof, are matched with the structural parameters and performance of the transmitting unit and the receiving unit. Along the radial circulation path of the magnetic flux lines, the structure of the transmitting unit and the structure of the receiving unit located on the inner side of the transmitting unit can better transmit and receive the magnetic field energy. Thus, the energy of the wireless transmission mechanism is better converted into mechanical vibration, thereby improving the transmission efficiency of the wireless transmission mechanism in the operating state, reducing the temperature rise rate of the wireless transmission mechanism in the operating state, and improving the continuous operation stability of the device. Furthermore, based on reasonable machining requirements, the increase in the amplitude of the machining tool mounted on the tool body is substantially consistent with the increase in the apparent power of the wireless transmission mechanism, thereby helping prevent the energy from being dissipated as heat and improving the energy conversion efficiency.

The ultrasonic spindle, the ultrasonic machine tool, and the ultrasonic drill based on the radial-nested-ring ultrasonic machining device in the present disclosure also feature low temperature rise during operation and high continuous operation stability.

### BRIEF DESCRIPTION OF THE DRAWINGS

The present disclosure is described below in detail in combination with the accompanying drawings. The present disclosure does not depend on a special combination of the technical features. Technical features shown in the accompanying drawings and/or illustrated below are all technical features of the present disclosure and corresponding improvements of the present disclosure.

It is to be noted that the same reference numeral refers to the same or approximately the same component in different accompanying drawings,
FIG. 1 is a structural view according to Preferred Embodiment 1 of the present disclosure;
FIG. 2 is a front view according to the embodiment shown in FIG. 1;
FIG. 3 is a partial cross-sectional view taken along line A-A shown in FIG. 2;
FIG. 4 is an enlarged view of portion B shown in FIG. 3;
FIG. 5 is a partial view according to the embodiment shown in FIG. 1;
FIG. 6 is a structural view of a transmitting mount;
FIG. 7 is a top view of a receiving magnet according to the embodiment shown in FIG. 4;
FIG. 8 is a cross-sectional view taken along line C-C shown in FIG. 7;
FIG. 9 is a top view of a transmitting magnet according to the embodiment shown in FIG. 4;
FIG. 10 is a cross-sectional view taken along line D-D shown in FIG. 9;
FIG. 11 is a partial exploded view according to the embodiment shown in FIG. 1;
FIG. 12 is a structural view of a collet;
FIG. 13 is a partial structural view according to Preferred Embodiment 2 of the present disclosure;
FIG. 14 is a structural view of a transmitting magnet according to the embodiment shown in FIG. 13;
FIG. 15 is a top view of a connecting top plate according to the embodiment shown in FIG. 13;
FIG. 16 is a side view of the transmitting magnet according to the embodiment shown in FIG. 13;
FIG. 17 is a front view of the transmitting magnet according to the embodiment shown in FIG. 13;
FIG. 18 is a cross-sectional view according to Preferred Embodiment 4 of the present disclosure; and
FIG. 19 is an enlarged view of portion E shown in FIG. 18.

### Reference Numerals:

100. ultrasonic spindle; 110. first rotary output unit; 111. lock ring; and 112. spacer;
200. ultrasonic drill; 210. housing; 211. accommodating cavity; 220. second rotary output unit; 221. grip handle; and 230. bearing;
10. ultrasonic machining device;
20. machining tool; and
1. tool body; 11. mounting cavity; 12. first limiting member; 2. ultrasonic transducer; 21. piezoelectric vibrator; 22. screw rod; 23. rear cover; 24. horn; 241. insertion bore; 3. wireless transmission mechanism; 31. transmitting unit; 311. transmitting coil; 312. transmitting magnet; 312a. first annular side plate; 312b. first annular top plate; 312c. first annular bottom plate; 312d. first coil embedding groove; 312e. connecting side plate; 312f. connecting top plate; 312g. connecting bottom plate; 3121. top arc surface; 3122. bottom arc surface; 32. receiving unit; 321. receiving coil; 322. receiving magnet; 322a. second annular side plate; 322b. second annular top plate; 322c. second annular bottom plate; 322d. second coil embedding groove; 33. transmitting mount; 331. first accommodating groove; 34. second accommodating groove; 35. second limiting member; 4. air gap; 5. collet; 51. conical section; 52. first deformation groove; 53. second deformation groove; 54. first gap; 55. second gap; and 6. nut.

### DETAILED DESCRIPTION

The specific implementations of the present disclosure are described in more detail below with reference to the drawings and embodiments. The following embodiments are intended to illustrate the present disclosure, but not to limit the scope of the present disclosure.

It is to be noted that orientations such as top, bottom, upward and downward used herein are defined based on the directions in the drawings. They are relative concepts and thus can change according to different positions and different using states. Therefore, these or other orientations should not be construed as limiting terms. It is to be noted that the term "include" does not exclude other elements or steps, and the term "a" or "an" does not exclude a plural form.

In addition, it is further to be noted that, for any single technical feature described or implied in the embodiments of the present disclosure, or any single technical feature illustrated or implied in the drawings, these technical features (or equivalents thereof) can still be combined to obtain other embodiments not directly mentioned in the present disclosure.

It should be further understood that the terms such as "first", "second", and the like are used in the present disclosure are used to describe various information, but the information should not be limited to these terms, and these terms are only used to distinguish the same type of information from each other. For example, without departing from the scope of the present disclosure, "first" information may be referred to as "second" information, and similarly, "second" information may also be referred to as "first" information.

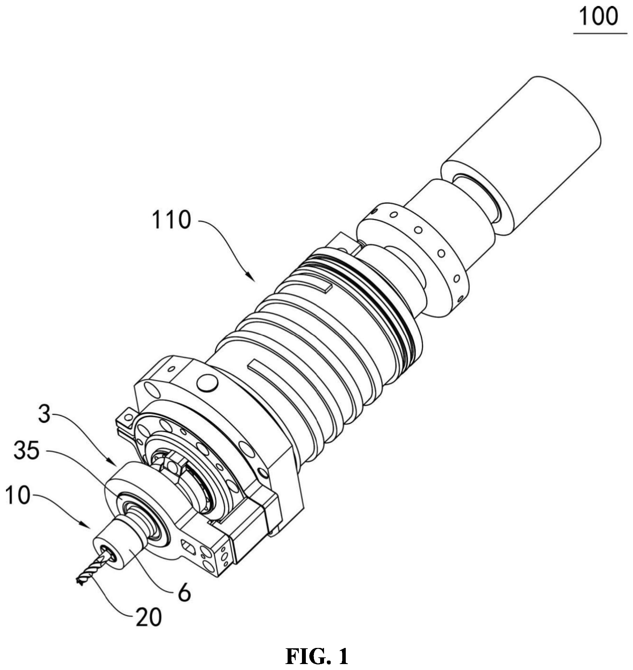

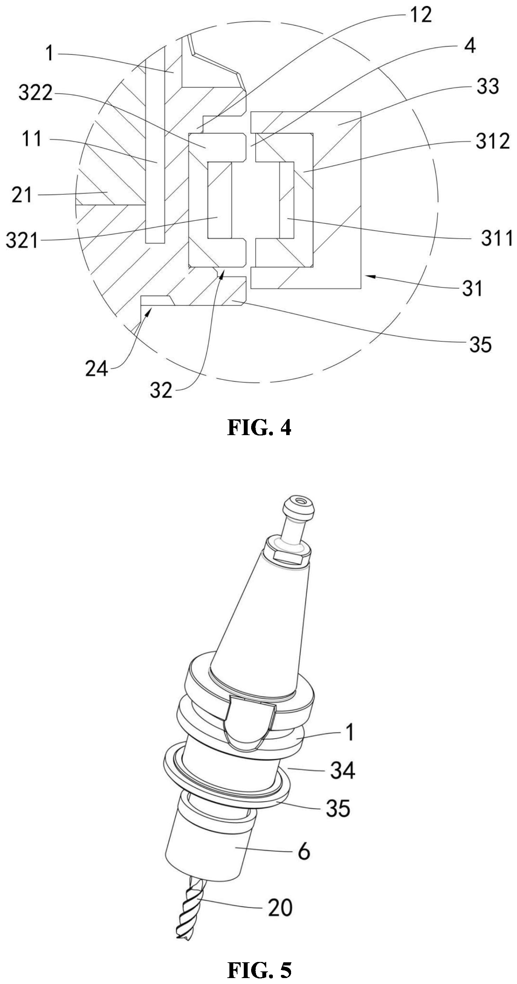

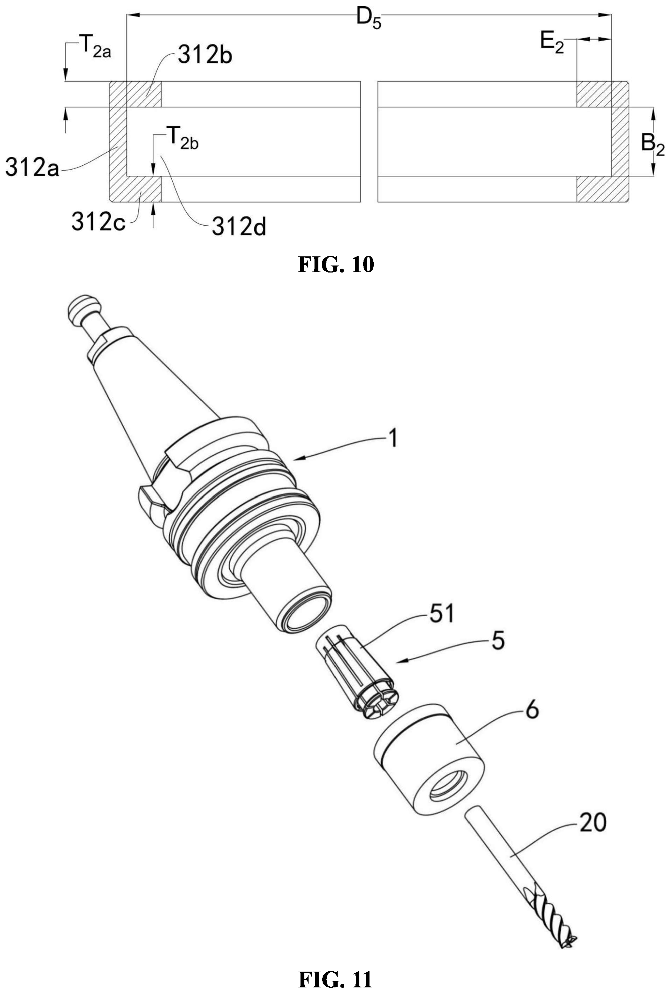

Referring to FIGS. 1 to 4 and FIGS. 7 to 10, an embodiment of the present disclosure provides a radial-nested-ring ultrasonic machining device (hereinafter referred to as an ultrasonic machining device 10), including a tool body 1, an ultrasonic transducer 2, and a wireless transmission mechanism 3. A rear end of the tool body 1 is assembled to a first rotary output unit 110 and rotates synchronously with the first rotary output unit 110. The first rotary output unit 110 serves as a rotary output device of this embodiment and is connected to the tool body 1 to output torque.

The wireless transmission mechanism 3 is disposed on an outer peripheral side of the tool body 1. Specifically, in this embodiment, the wireless transmission mechanism 3 includes a transmitting unit 31 and a receiving unit 32.

The receiving unit 32 includes a receiving coil 321 and a receiving magnet 322 configured to receive a magnetic field generated by the transmitting unit 31, and the receiving unit 32 is disposed on the outer peripheral side of the tool body 1.

The transmitting unit 31 includes a transmitting coil 311 and a transmitting magnet 312 configured to generate a magnetic field based on a current in the transmitting coil 311. The transmitting unit 31 is disposed on an outer peripheral side of the receiving unit 32, and the transmitting unit 31 and the receiving unit 32 are arranged opposite each other and form an air gap 4.

Specifically, the transmitting unit 31 is in the form of a full ring or a partial ring disposed around the outer periphery of the tool body 1. It can be understood that the transmitting unit 31 extends around the outer peripheral side of the tool body 1 by an angle of 0, $\frac{π}{4} \leq θ \leq 2 π$. Preferably, $θ = \frac{π}{3} , θ = \frac{π}{2}$, *θ = π, θ =* 2*π.* Specifically, θ is a central angle corresponding to the circumferential extension of the transmitting magnet 312 along the tool body 1.

### Embodiment 1

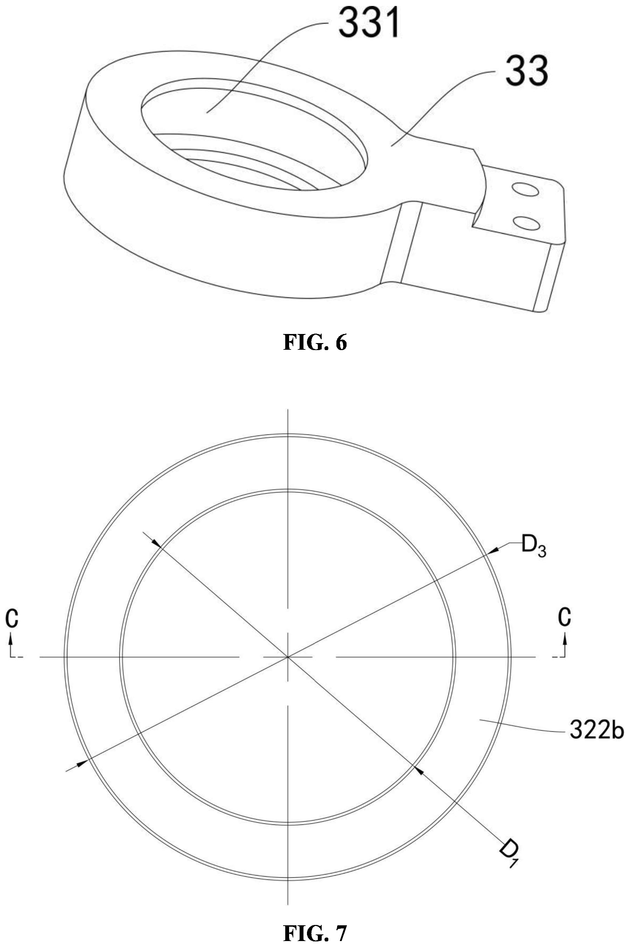

In Embodiment 1, θ=2π. Referring to FIGS. 7 to 10, an end surface of the transmitting magnet 312 facing the tool body 1 is provided with a first coil embedding groove 312d disposed around the outer peripheral side of the tool body 1, and the transmitting coil 311 is accommodated in the first coil embedding groove 312d. Specifically, in Embodiment 1, the transmitting magnet 312 includes a first annular side plate 312a, a first annular top plate 312b, and a first annular bottom plate 312c. The first annular top plate 312b is connected to a rear side of the first annular side plate 312a, and the first annular bottom plate 312c is connected to a front side of the first annular side plate 312a. The first annular side plate 312a, the first annular top plate 312b, and the first annular bottom plate 312c form the first coil embedding groove 312d with an opening facing the receiving unit 32.

A thickness of the first annular top plate 312b is T₂ₐ mm, a thickness of the first annular bottom plate 312c is T_{2b} mm, an inner diameter of the transmitting magnet 312 is D₄ mm, an outer diameter of the transmitting magnet 312 is D₆ mm, an axial extension length of the opening of the first coil embedding groove 312d along the tool body 1 is B₂ mm, a depth of the first coil embedding groove 312d is E₂ mm, and a diameter of the first coil embedding groove 312d is D₅ mm.

An end surface of the receiving magnet 322 facing the transmitting unit 31 is provided with a second coil embedding groove 322d disposed around the tool body 1, and the receiving coil 321 is accommodated in the second coil embedding groove 322d. Specifically, in Embodiment 1, the receiving magnet 322 includes a second annular side plate 322a, a second annular top plate 322b, and a second annular bottom plate 322c. The second annular top plate 322b is connected to a rear side of the second annular side plate 322a, and the second annular bottom plate 322c is connected to a front side of the second annular side plate 322a. The second annular side plate 322a, the second annular top plate 322b, and the second annular bottom plate 322c form the second coil embedding groove 322d with an opening facing the transmitting unit 31.

A thickness of the second annular top plate 322b is T₁ₐ mm, a thickness of the second annular bottom plate 322c is T_{1b} mm, an inner diameter of the receiving magnet 322 is D₁ mm, an outer diameter of the receiving magnet 322 is D₃ mm, a diameter of the second coil embedding groove 322d is D₂ mm, an axial extension length of the opening of the second coil embedding groove 322d along the tool body 1 is B₁ mm, and a depth of the second coil embedding groove 322d is E₁ mm.

Preferably, the above parameters of the transmitting magnet 312 and the receiving magnet 322 can be measured by a Mitutoyo dial caliper or other length measuring tools.

The transmitting magnet 312 and the receiving magnet 322 each have a relative permeability of u, with a vacuum permeability being u₀ H/m. A magnetic-circuit area of the second annular side plate 322a is S₁, and the magnetic-circuit area S₁ satisfies: ${S}_{1} = π \left[{\left(\frac{{D}_{2}}{2}\right)}^{2}-{\left(\frac{{D}_{1}}{2}\right)}^{2}\right]$ (1)

A reluctance R_{rec} of the receiving unit 32 is expressed as follows: ${R}_{1} = \frac{{B}_{1}}{{S}_{1} \times u \times {u}_{0}} \times 1000$ (2) ${R}_{2} = \frac{ln \left(\frac{{D}_{3}}{{D}_{1}}\right)}{u \times {u}_{0} \times 2 \times π \times {T}_{1 a}} \times 1000$ (3) ${R}_{3} = \frac{ln \left(\frac{{D}_{3}}{{D}_{1}}\right)}{u \times {u}_{0} \times 2 \times π \times {T}_{1 b}} \times 1000$ (4) ${R}_{rec} = {R}_{1} + {R}_{2} + {R}_{3}$ (5)

In Embodiment 1, R₁ is a reluctance of the second annular side plate 322a, R₂ is a reluctance of the second annular top plate 322b, and R₃ is a reluctance of the second annular bottom plate 322c.

A reluctance Rₜᵣₐ of the transmitting unit 31 is expressed as follows: ${R}_{4} = \frac{{B}_{2}}{u \times {u}_{0} \times π \times \left[{\left(\frac{{D}_{6}}{2}\right)}^{2}-{\left(\frac{{D}_{5}}{2}\right)}^{2}\right]} \times 1000$ (6) ${R}_{5} = \frac{ln \left(\frac{{D}_{6}}{{D}_{4}}\right)}{2 \times π \times u \times {u}_{0} \times {T}_{2 a}} \times 1000$ (7) ${R}_{6} = \frac{ln \left(\frac{{D}_{6}}{{D}_{4}}\right)}{2 \times π \times u \times {u}_{0} \times {T}_{2 b}} \times 1000$ (8) ${R}_{tra} = {R}_{4} + {R}_{5} + {R}_{6}$ (9)

In Embodiment 1, a reluctance of the first annular side plate 312a is R₄, a reluctance of the first annular top plate 312b is R₅, and a reluctance of the first annular bottom plate 312c is R₆.

In Embodiment 1, the wireless transmission mechanism 3 has an air-gap reluctance of R_{δ} H⁻¹, an air-gap width of L mm, and a vacuum permeability of u₀ H/m. The air-gap reluctance R_{δ} is expressed as follows: ${R}_{δ} = {K}_{2} \times \left({R}_{7}+{R}_{8}\right)$ (10)

R₇ is an air-gap reluctance between the first annular top plate 312b and the second annular top plate 322b, R₈ is an air-gap reluctance between the first annular bottom plate 312c and the second annular bottom plate 322c, and K₂ is an air-gap reluctance correction coefficient, 0.2≤K₂≤3. The air-gap widths of the wireless transmission mechanism 3 vary. Under different air-gap widths, the magnetic circuit shapes of the magnetic field differ, and the field division becomes complex. In order to make the air-gap reluctance more accurate under different air-gap widths, the parameter K₂ is introduced to correct the air-gap reluctance.

Based on the above parameters of the transmitting magnet 312 and the receiving magnet 322:
if T₁ₐ<T₂ₐ, then T₇=T₁ₐ; if T₁ₐ>T₂ₐ, then T₇=T₂ₐ; if T_{1b}<T_{2b}, then T₈=T_{1b}; and if T_{1b}>T_{2b}, then T₈=T_{2b}. R₇ and R₈ satisfy the following equations: ${F}_{m} = 1 + \frac{L}{\sqrt{{10}^{- 3} \times {D}_{3} \times {T}_{m} \times π}} \times ln \left[\frac{{10}^{5} \times 2 \times \left({E}_{1}+{E}_{2}+L\right)}{L}\right]$ (11) ${R}_{m} = \frac{1}{2 \times π \times {u}_{0} \times a \times \left({β}_{m}-{γ}_{m}\right)} \times ln \left(\frac{\left|\frac{L - {β}_{m}}{L - {γ}_{m}}\right|}{\left(\left|\frac{- {β}_{m}}{- {γ}_{m}}\right|\right)}\right) \times \frac{10}{{F}_{m}} \times 1000$ (12)
where, m is equal to 7 or 8, and Fₘ is a fringing flux coefficient configured to correct the influence of a fringing air-gap reluctance on the air-gap reluctance.

In addition, the parameters β and γ satisfy: ${β}_{m} = \frac{- {b}_{m} + \sqrt{{b}_{m}^{2} - 4 {ac}_{m}}}{2 a}$ (13) ${γ}_{m} = \frac{- {b}_{m} - \sqrt{{b}_{m}^{2} - 4 {ac}_{m}}}{2 a}$ (14)

The parameters a, b, and c are configured to describe an air-gap area between the first annular top plate 312b and the second annular top plate 322b and an air-gap area between the first annular bottom plate 312c and the second annular bottom plate 322c. Specifically, $a = 2 \times k$ (15) $\begin{matrix}{b}_{m} = k \times {D}_{3} + {T}_{m} \\ {c}_{m} = \frac{1}{2} \times {D}_{3} \times {T}_{m}\end{matrix}$

The parameter k is configured to describe an air-gap shape between the first annular top plate 312b and the second annular top plate 322b and an air-gap shape between the first annular bottom plate 312c and the second annular bottom plate 322c. Specifically, $k = \frac{{T}_{2 a} - {T}_{1 a}}{2 \times L}$ (18)

If T₁ₐ=T₂ₐ, then T₇=T₁ₐ; and if T_{1b}=T_{2b}, then T₈=T_{1b}. R₇ and R₈ satisfy the following equations: ${F}_{m} = 1 + \frac{L}{\sqrt{{10}^{- 3} \times {D}_{3} \times {T}_{m} \times π}} \times ln \left[\frac{{10}^{5} \times 2 \times \left({E}_{1}+{E}_{2}+L\right)}{L}\right]$ (19) ${R}_{m} = \frac{1}{2 \times π \times {u}_{0} \times {T}_{m}} \times ln \left(\frac{{D}_{3} \times 0.5 + L}{{D}_{3} \times 0.5}\right) \times \frac{10}{{F}_{m}} \times 1000$ (20)
where, m is equal to 7 or 8.

Based on the description of the parameters a, b, c, and k, the air-gap shape and area between the first annular top plate 312b and the second annular top plate 322b and the air-gap shape and area between the first annular bottom plate 312c and the second annular bottom plate 322c are expressed according to Eqs. (15) to (18). On this basis, according to Eqs. (11) to (12) that introduce the parameters a, b, c, and k, the air-gap reluctance between the first annular top plate 312b and the second annular top plate 322b and the air-gap reluctance between the first annular bottom plate 312c and the second annular bottom plate 322c are obtained.

The air-gap width L is a distance between the transmitting unit 31 and the receiving unit 32. Preferably, 0.1≤L≤3. Specifically, in different embodiments, the air-gap width L may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.5 mm, 2 mm, 2.5 mm, or 3 mm. Preferably, the air-gap width L is 0.4 mm, 0.5 mm, 0.6 mm, 0.7 mm, 0.8 mm, 0.9 mm, 1 mm, or 1.1 mm.

An inductance of the transmitting unit 31 is L_{dtra} H, an inductance of the receiving unit 32 is L_{drec} H, a number of turns of the transmitting coil 311 is Nₜᵣₐ, a number of turns of the receiving coil 321 is N_{rec}, the air-gap reluctance of the wireless transmission mechanism 3 is R_{δ} H⁻¹, the reluctance of the transmitting unit 31 is Rₜᵣₐ H⁻¹, and the reluctance of the receiving unit 32 is R_{rec} H⁻¹. Then: ${L}_{d tra} = \frac{{N}_{tra}^{2}}{{R}_{δ} + {R}_{rec} + {R}_{tra}}$ (21) ${L}_{d rec} = \frac{{N}_{rec}^{2}}{{R}_{δ} + {R}_{rec} + {R}_{tra}}$ (22)
where, 2≤Nₜᵣₐ≤240, 2≤N_{rec}≤240.

Furthermore, based on the above structure of the ultrasonic machining device 10 disclosed in Embodiment 1, a frequency of an electrical signal input to the receiving unit 32 is f Hz, a peak current applied to the transmitting unit 31 is Iₜᵣₐ A, a peak current applied to the receiving unit 32 is I_{rec} A, an apparent power of the transmitting unit 31 is Qₜᵣₐ VA, and an apparent power of the receiving unit 32 is Q_{rec} VA. Then the above parameters satisfy the following equations: ${Q}_{tra} = \left(2\times f\times {L}_{d tra}\times {I}_{tra}^{2}\right)$ (23) ${Q}_{rec} = \left(2\times f\times {L}_{d rec}\times {I}_{rec}^{2}\right)$ (24)

Substituting Eqs. (21) and (22) into Eqs. (23) and (24), respectively, yields the relationship between the apparent power Qₜᵣₐ of the transmitting unit 31 and the above parameters, and the relationship between the apparent power Q_{rec} of the receiving unit 32 and the above parameters in Embodiment 1: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$ (25) ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$ (26)

It should be noted that, since Eqs. (1) to (26) involve some parameters that need to be measured from the ultrasonic machining device 10, in order to avoid errors in the measured data, K₁ is set. K₁ is a correction coefficient, 0.5≤K₁≤1.5, which is configured to correct the error between the apparent power Qₜᵣₐ of the transmitting unit 31 as well as the apparent power Q_{rec} of the receiving unit 32 and an optimal apparent power caused by human errors during data measurement, such as the measurement error of the frequency of the electrical signal input to the receiving unit 32 and the measurement error of the peak current. Typically, the measurement error of the frequency of the electrical signal is about 15%, and the measurement error of the peak current is about 20%. Therefore, it can be understood that when there is no error in the measured parameters, preferably, K₁=1.

Thus, when the structural parameters of the transmitting unit 31 and the receiving unit 32 of the ultrasonic machining device 10 provided in Embodiment 1 satisfy Eqs. (25) and (26), the peak currents applied to the transmitting unit 31 and the receiving unit 32 enable their apparent powers to reach Qₜᵣₐ and Q_{rec}, respectively. That is, the structures and performance of the transmitting unit 31 and the receiving unit 32 achieve a mutually matched state, and they form a stable energy transmission model. This energy transmission model is reflected in the operating state such that when the transmitting unit 31 operates at the apparent power Qₜᵣₐ and the receiving unit 32 operates at the apparent power Q_{rec}, the applied peak currents and the apparent powers are matched with the structural parameters and performance of the transmitting unit 31 and the receiving unit 32. Thus, the energy of the wireless transmission mechanism 3 is better converted into mechanical vibration, thereby improving the transmission efficiency of the wireless transmission mechanism 3 in the operating state, reducing the temperature rise of the wireless transmission mechanism 3 in the operating state, and improving the continuous operation stability of the device. Furthermore, this design can help prevent the energy from being dissipated as heat, thereby improving the energy conversion efficiency, and enable more energy to perform effective work, thereby generating a larger amplitude when the machining tool 20 is operating, and improving the machining efficiency.

Specifically, in order to verify that when the structural parameters of the receiving unit 32 and the transmitting unit 31 of the ultrasonic machining device 10 provided in Embodiment 1 of the present disclosure satisfy the above equations, i.e., when the structural parameters of the receiving unit 32 and the transmitting unit 31 are matched with the applied peak currents and the apparent powers, compared with conventional ultrasonic machining devices, the receiving unit 32 and the transmitting unit 31 of Embodiment 1 of the present disclosure achieve a lower temperature rise rate in the operating state, and the machining tool 20 achieves an amplitude increase substantially consistent with the increase in the apparent power, two groups of tests are conducted, with reference to the following tables:

In Table 1A and Table 1B, a first ultrasonic machining device based on the structure of the ultrasonic machining device 10 described above is tested, and in combination with Eqs. (1) to (26), the apparent power Q₁ₜᵣₐ of the transmitting unit 31 and the apparent power Q_{1rec} of the receiving unit 32 of the first ultrasonic machining device are obtained: ${Q}_{1 tra} = \left[\frac{2 \times f \times {N}_{tra}^{2} \times {I}_{tra}^{2}}{{R}_{δ} + {R}_{rec} + {R}_{tra}}\right]$ ${Q}_{1 rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting ranges of Q₁ₜᵣₐ and Q_{1rec} are obtained. After the current is applied to the first ultrasonic machining device, the temperature rise of the first ultrasonic machining device during operation for a preset time t is measured under the condition that the transmitting unit 31 operates at an apparent power Q₂ₜᵣₐ and the receiving unit 32 operates at an apparent power Q_{2rec}. Q₂ₜᵣₐ is within the setting range of Q₁ₜᵣₐ, and Q_{2rec} is within the setting range of Q_{1rec}. Specifically, 0.5≤K₁≤1.5.

Meanwhile, referring to Table 2A and Table 2B, a second ultrasonic machining device is provided. Based on the structures of the transmitting unit 31 and the receiving unit 32 of the second ultrasonic machining device, according to Eqs. (1) to (26), the apparent power Q₃ₜᵣₐ of the transmitting unit 31 and the apparent power Q_{3rec} of the receiving unit 32 of the second ultrasonic machining device are obtained: ${Q}_{3 tra} = \left[\frac{2 \times f \times {N}_{tra}^{2} \times {I}_{tra}^{2}}{{R}_{δ} + {R}_{rec} + {R}_{tra}}\right]$ ${Q}_{3 rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting ranges of Q₃ₜᵣₐ and Q_{3rec} are obtained.

After the current is applied to the second ultrasonic machining device, the temperature rise of the second ultrasonic machining device during operation for a preset time t is measured under the condition that the transmitting unit 31 operates at an apparent power Q₄ₜᵣₐ and the receiving unit 32 operates at an apparent power Q_{4rec}. Q₄ₜᵣₐ is not within the setting range of Q₃ₜᵣₐ, and Q_{4rec} is not within the setting range of Q_{3rec}.

The test method is as follows:
The ambient temperature is 24°C, and the air-gap width L between the transmitting unit 31 and the receiving unit 32 of each of the first ultrasonic machining device and the second ultrasonic machining device is set to 1 mm. The transmitting unit 31 is connected to an ultrasonic generator, and the receiving unit 32 is connected to the ultrasonic transducer 2. The receiving unit 32 and the transmitting unit 31 are connected to a Yokogawa power oscilloscope to acquire the applied peak currents Iₜᵣₐ and I_{rec} and the apparent powers Qₜᵣₐ and Q_{rec}. The frequency f of the electrical signal input to the receiving unit 32 is detected using a Tektronix oscilloscope.

**Table 1A**

| First ultrasonic machining device | | | | |
|---|---|---|---|---|
| f=21800 Hz; R_{δ}=2352172 H⁻¹; R_{rec}=16904 H⁻¹; Rₜᵣₐ=11895H⁻¹; L=1 mm | | | | |
| Test ambient temperature: 24°C; Preset operating time t: 10 min | | | | |
| Transmitting unit | | | | |
| N=15 | | | | |
| Iₜᵣₐ (A) | Range of Q₁ₜᵣₐ (VA) | Q₂ₜᵣₐ (VA) | Temperature of transmitting unit (°C) | Amplitude of machining tool (µm) |
| 3 | 20.4-53.8 | 38 | 23.0 | 10 |
| | | | 30.0 | |
| | | | 36.0 | |
| | | | 41.0 | |
| | | | 50.0 | |
| 2.4 | 13-34.4 | 23 | 23.0 | 5.5 |
| | | | 26.0 | |
| | | | 29.0 | |
| | | | 37.0 | |
| | | | 41.0 | |
| 1.7 | 6.5-17.3 | 12 | 22.9 | 2.7 |
| | | | 25.0 | |
| | | | 30.0 | |
| | | | 36.0 | |
| | | | 41.0 | |

**Table 1B**

| First ultrasonic machining device | | | | |
|---|---|---|---|---|
| f=21800 Hz; R_{δ}=2352172 H⁻¹; R_{rec}=16904 H⁻¹; Rₜᵣₐ=11895 H⁻¹; L=1 mm | | | | |
| Test ambient temperature: 24°C; Preset operating time t: 10 min | | | | |
| Receiving unit | | | | |
| N=65 | | | | |
| I_{rec} (A) | Range of Q_{1rec} (VA) | Q_{2rec} (VA) | Temperature of receiving unit (°C) | Amplitude of machining tool (µm) |
| 1 | 42.6-112.2 | 77.4 | 23.0 | 10 |
| | | | 32.0 | |
| | | | 37.0 | |
| | | | 43.0 | |
| | | | 53.0 | |
| 0.7 | 20.9-55 | 37.9 | 23.0 | 5.5 |
| | | | 27.0 | |
| | | | 33.0 | |
| | | | 38.0 | |
| | | | 43.0 | |
| 0.5 | 10.6-28 | 19.4 | 23.0 | 2.7 |
| | | | 28.0 | |
| | | | 33.0 | |
| | | | 37.0 | |
| | | | 42.0 | |

**Table 2A**

| Second ultrasonic machining device | | | | |
|---|---|---|---|---|
| f=16500 Hz; R_{δ}=1181987 H⁻¹; R_{rec}=9696 H⁻¹; Rₜᵣₐ=7574 H⁻¹; L=1 mm | | | | |
| Test ambient temperature: 24°C; Preset operating time t: 10 min | | | | |
| Transmitting unit | | | | |
| N=15 | | | | |
| Iₜᵣₐ (A) | Range of Q₃ₜᵣₐ (VA) | Q₄ₜᵣₐ (VA) | Temperature of transmitting unit (°C) | Amplitude of machining tool (µm) |
| 2.3 | 18-47.5 | 55 | 21.5 | 1.3 |
| | | | 35.0 | |
| | | | 48.0 | |
| | | | 61.0 | |
| | | | 70.0 | |
| 1.85 | 11.7-30.7 | 36 | 21.0 | 0.9 |
| | | | 33.0 | |
| | | | 41.0 | |
| | | | 50.0 | |
| | | | 62.0 | |
| 1.4 | 6.7-17.6 | 21 | 22.5 | 10.5 |
| | | | 31.0 | |
| | | | 40.0 | |
| | | | 46.0 | |
| | | | 53.0 | |

**Table 2B**

| Second ultrasonic machining device | | | | |
|---|---|---|---|---|
| f=16500 Hz; R_{δ}=1181987 H⁻¹; R_{rec}=9696 H⁻¹; Rₜᵣₐ=7574 H⁻¹; L=1 mm | | | | |
| Test ambient temperature: 24°C; Preset operating time t: 10 min | | | | |
| Receiving unit | | | | |
| N=65 | | | | |
| I_{rec} (A) | Range of Q_{3rec} (VA) | Q_{4rec} (VA) | Temperature of receiving unit (°C) | Amplitude of machining tool (µm) |
| 0.75 | 36-95 | 33 | 21.5 | 1.3 |
| | | | 33.0 | |
| | | | 46.0 | |
| | | | 59.0 | |
| | | | 67.0 | |
| 0.61 | 23.8-62.7 | 20 | 21.0 | 0.9 |
| | | | 30.0 | |
| | | | 39.0 | |
| | | | 47.0 | |
| | | | 59.0 | |
| 0.35 | 7.8-20.7 | 6 | 22.5 | 0.5 |
| | | | 29.0 | |
| | | | 38.0 | |
| | | | 44.0 | |
| | | | 52.0 | |

It should be noted that Table 1A and Table 1B show the temperature rise data of the receiving unit 32 and the transmitting unit 31, and the amplitude data generated by the attached machining tool 20 when different magnitudes of peak currents are applied and continuous operation lasts for a preset time of 10 min at the preset ambient temperature, for the first ultrasonic machining device designed in accordance with Eqs. (25) and (26) of the present disclosure. Table 2A and Table 2B show the temperature rise data of the receiving unit 32 and the transmitting unit 31, and the amplitude data generated by the attached machining tool 20 when different magnitudes of currents are applied and continuous operation lasts for a preset time of 10 min at the preset ambient temperature, for the second ultrasonic machining device not designed in accordance with Eqs. (25) and (26) of the present disclosure.

It can be seen from Table 1A and Table 1B that when the structural parameters of the transmitting unit 31 and the receiving unit 32 are matched with the frequency of the electrical signal input to the receiving unit 32, i.e., when the structure of the ultrasonic machining device satisfies Eqs. (25) and (26) of the present disclosure, the structural parameters and performance of the transmitting unit 31 and the receiving unit 32 are matched with the applied peak currents and the apparent powers. Thus, during operation of the ultrasonic machining device, the energy of the wireless transmission mechanism 3 is better converted into mechanical vibration, thereby improving the transmission efficiency of the wireless transmission mechanism 3 in the operating state, reducing the temperature rise of the wireless transmission mechanism 3 in the operating state, and improving the continuous operation stability of the device. Furthermore, the increase in the amplitude of the machining tool 20 mounted on the tool body 1 is substantially consistent with the increase in the apparent power of the wireless transmission mechanism 3, thereby helping prevent the energy from being dissipated as heat and enabling the wireless transmission mechanism 3 to operate with higher energy conversion efficiency.

It can be seen from Table 2A and Table 2B that when the structural parameters of the transmitting unit 31 and the receiving unit 32 are not matched with the frequency of the electrical signal input to the receiving unit 32, i.e., when the transmitting unit 31 and the receiving unit 32 of the second ultrasonic machining device do not satisfy Eqs. (25) and (26) of the present disclosure, during operation of such a second ultrasonic machining device, a higher proportion of the energy of the wireless transmission mechanism 3 is dissipated as heat. As a result, the temperature rise rate of such a second ultrasonic machining device is significantly higher than that of the first ultrasonic machining device shown in Table 1A and Table 1B. Moreover, the increase in the amplitude generated by the machining tool 20 of such a second ultrasonic machining device differs greatly from the increase in the apparent power. Accordingly, when the apparent power of such a second ultrasonic machining device increases, the amplitude change of the machining tool 20 lags behind and changes only slightly, and the overall effective energy conversion efficiency of the wireless transmission mechanism 3 is relatively low.

It should be noted that in Embodiment 1, the transmitting magnet 312 and the receiving magnet 322 of each of the first ultrasonic machining device and the second ultrasonic machining device are made of manganese-zinc ferrite material, with a relative permeability u of 2500. In other implementations, the transmitting magnet 312 can be made of any one material selected from a group consisting of ferrite, neodymium iron boron, high-frequency ceramic material, powder metallurgy material, amorphous and nanocrystalline alloys, and cobalt iron, and the receiving magnet 322 can be made of any one material selected from a group consisting of ferrite, neodymium iron boron, high-frequency ceramic material, powder metallurgy material, amorphous and nanocrystalline alloys, and cobalt iron. Based on the above equations, according to the materials used for preparing the transmitting magnet 312 and the receiving magnet 322, the relative permeability u of the corresponding material is introduced.

It should be noted that, in Embodiment 1, the apparent powers Q₂ₜᵣₐ, Q_{2rec}, Q₄ₜᵣₐ, and Q_{4rec}, as well as the peak currents Iₜᵣₐ and I_{rec} of the first ultrasonic machining device and the second ultrasonic machining device are all measured by a Yokogawa power oscilloscope (model: PX8000). Specifically, Embodiment 1 provides a measurement method as follows:
The CH1 voltage probe of the Yokogawa power oscilloscope is connected to positive and negative terminals of the transmitting unit 31, and the CH1 current probe is connected to the transmitting unit 31. The current direction of the CH1 current probe is set to flow from the positive terminal to the negative terminal.

The CH2 voltage probe of the Yokogawa power oscilloscope is connected to positive and negative terminals of the receiving unit 32, and the CH2 current probe is connected to the receiving unit 32. The current direction of the CH2 current probe is set to flow from the positive terminal to the negative terminal.

The ELEM1 button is pressed to activate the CH1 measurement channel. The U1 button is pressed, and voltage measurement is selected. The I1 button is pressed, and current measurement is selected. The P1 button is pressed, and power measurement is selected.

The ELEM2 button is pressed to activate the CH2 measurement channel. The U2 button is pressed, and voltage measurement is selected. The I2 button is pressed, and current measurement is selected. The P2 button is pressed, and power measurement is selected.

The "MODE" button is pressed, and the "Numeric+Wave" mode is selected in the "DISPLAY MODE" menu. The "SETTING" button is pressed, and in the "NUMERIC SETTING" menu, "Format" is set to "16 Items".

The "START/STOP" button is pressed to start the test. The apparent powers and the peak currents of the transmitting unit 31 and the receiving unit 32 are acquired from the data displayed on the screen, where I+pk1 denotes the CH1 current peak, i.e., the peak current applied to the transmitting unit 31; S₁ denotes the CH1 apparent power, i.e., the apparent power of the transmitting unit 31; I+pk2 denotes the CH2 current peak, i.e., the peak current applied to the receiving unit 32; and S₂ denotes the CH2 apparent power, i.e., the apparent power of the receiving unit 32.

In addition, in the first ultrasonic machining device and the second ultrasonic machining device, the frequency f of the electrical signal input to the receiving unit 32 is measured by a Tektronix oscilloscope (model: MDO3204). Specifically, Embodiment 1 provides a measurement method as follows:
The differential probe is inserted into the CH1 port and connected to the positive and negative terminals of the receiving unit 32.

"Menu" is opened, "Edge" is selected under "Type", "1" is selected under "Source", "AC" is selected under "Coupling", "Rising Edge" is selected under "Slope", "Level" is set to "0 V", and "Auto" is selected under "Mode".

The button "1" is pressed to activate a CH1 measurement channel, and AC coupling mode is selected from the options that pop up at the bottom of the screen. The "Measure" button in the Wave Inspector button area is pressed, "Add Measurement" is selected from the options that pop up at the bottom of the screen, "1" is selected under "Source", "Frequency" is selected under "Measurement Type", and then "OK Add Measurement" is selected.

The "Run/Stop" button is pressed to start the test. After the frequency sweep of the ultrasonic power supply is completed, the measured frequency on the screen is read and recorded, and this frequency is the frequency f of the electrical signal input to the receiving unit 32.

In addition, in Embodiment 1, the machining tool 20 used by the first ultrasonic machining device and the second ultrasonic machining device is a D6 flat-end mill with an overhang length of 20 mm. It should be noted that the above test method may also be performed with other machining tools 20 with corresponding overhang lengths. For example, the machining tool 20 may be a D4 cemented carbide rod with an overhang length of 20 mm, or a D16 flat-end mill with an overhang length of 50 mm.

### Embodiment 2

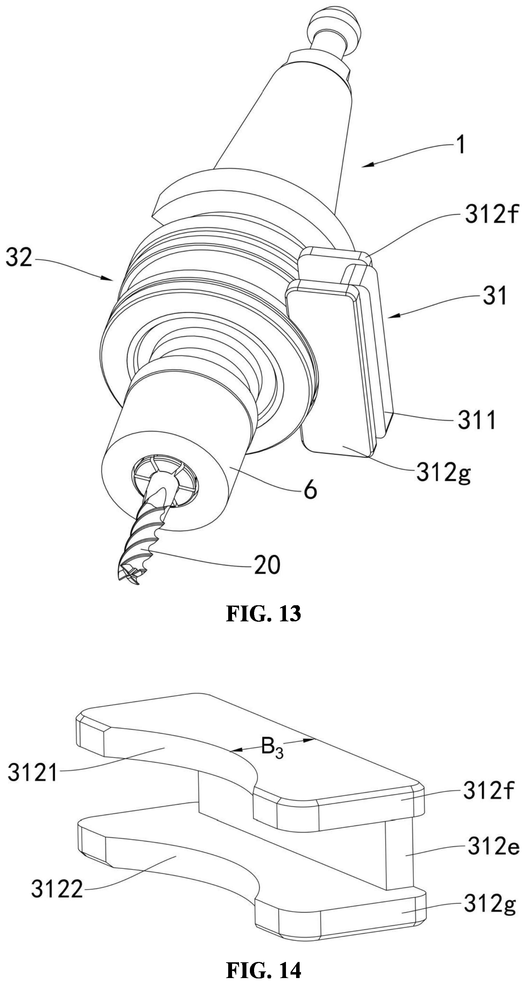

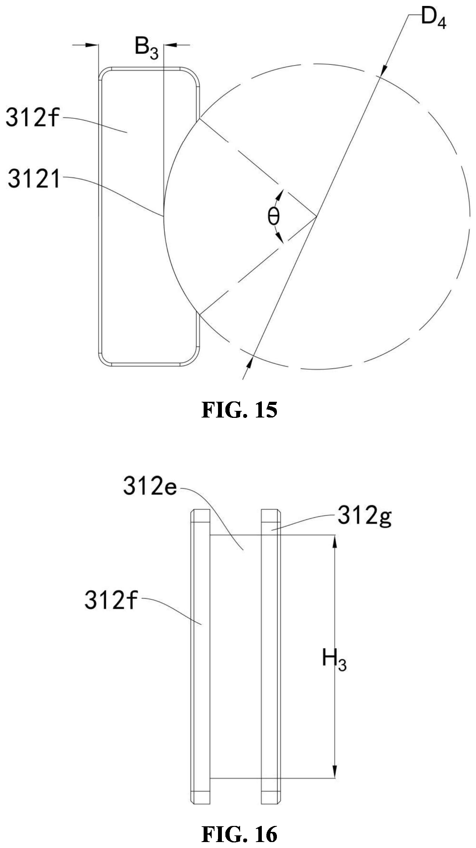

Referring to FIGS. 13 to 17, Embodiment 2 differs from Embodiment 1 in that: $θ = \frac{π}{3}$, which falls within the range of $\frac{π}{4} \leq θ < 2 π$. In Embodiment 2, an end surface of the transmitting magnet 312 facing the receiving unit 32 is provided with a first coil embedding groove 312d disposed around the tool body 1, and the transmitting coil 311 is accommodated in the first coil embedding groove 312d. Specifically, in Embodiment 2, the transmitting magnet 312 includes a connecting side plate 312e, a connecting top plate 312f, and a connecting bottom plate 312g.

Referring to FIGS. 14 to 17, the connecting top plate 312f is connected to a rear side of the connecting side plate 312e. An end surface of the connecting top plate 312f facing the receiving magnet 322 is provided with a top arc surface 3121 matched with the receiving magnet 322, and a chord length of the top arc surface 3121 along a chord length direction of the top arc surface 3121 is smaller than a length of the connecting top plate 312f.

The connecting bottom plate 312g is connected to a front side of the connecting side plate 312e. An end surface of the connecting bottom plate 312g facing the receiving magnet 322 is provided with a bottom arc surface 3122 matched with the receiving magnet 322, and a chord length of the bottom arc surface 3122 along a chord length direction of the bottom arc surface 3122 is smaller than a length of the connecting bottom plate 312g. The top arc surface 3121 and the bottom arc surface 3122 enable the transmitting magnet 312 to be disposed around the outer periphery of the receiving magnet 322 and close to the receiving magnet 322.

The connecting side plate 312e, the connecting top plate 312f, and the connecting bottom plate 312g form the first coil embedding groove 312d with an opening facing the receiving unit 32. The transmitting coil 311 is disposed around the connecting side plate 312e and is partially embedded in the first coil embedding groove 312d. a length of the connecting side plate 312e is smaller than a length of the connecting top plate 312f, and the length of the connecting side plate 312e is smaller than a length of the connecting bottom plate 312g, such that when the transmitting coil 311 is wound on the connecting side plate 312e, the transmitting coil 311 is wrapped by the connecting top plate 312f and the connecting bottom plate 312g. Based on this structure, when the transmitting coil 311 is energized, the generated magnetic flux lines exit from a front end surface of the connecting side plate 312e toward the receiving magnet 322, and return from a rear end surface of the connecting side plate 312e after passing through the receiving magnet 322.

A thickness of the connecting side plate 312e is A₂ mm, the length of the connecting side plate 312e is H₃ mm, a thickness of the connecting top plate 312f is T₂ₐ mm, a thickness of the connecting bottom plate 312g is T_{2b} mm, a minimum value among distances from an outermost edge of the transmitting magnet 312 to inner arc surfaces is B₃ mm, a diameter of the top arc surface 3121 is D₄ mm, an axial extension length of the opening of the first coil embedding groove 312d along the tool body 1 is B₂ mm, and a depth of the first coil embedding groove 312d is E₂ mm. In Embodiment 2, the inner arc surfaces of the transmitting magnet 312 are the top arc surface 3121 and the bottom arc surface 3122.

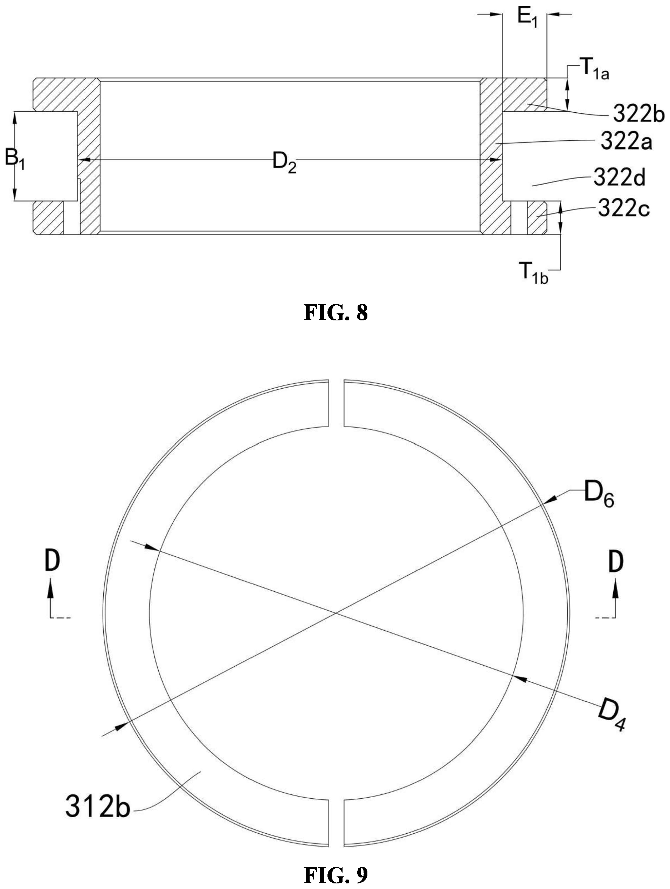

Referring to FIGS. 7 and 8, an end surface of the receiving magnet 322 facing the transmitting unit 31 is provided with a second coil embedding groove 322d disposed around the tool body 1, and the receiving coil 321 is accommodated in the second coil embedding groove 322d. Specifically, in Embodiment 2, the receiving magnet 322 includes a second annular side plate 322a, a second annular top plate 322b, and a second annular bottom plate 322c. The second annular top plate 322b is connected to a rear side of the second annular side plate 322a, and the second annular bottom plate 322c is connected to a front side of the second annular side plate 322a. The second annular side plate 322a, the second annular top plate 322b, and the second annular bottom plate 322c form the second coil embedding groove 322d with an opening facing the transmitting unit 31.

A thickness of the second annular top plate 322b is T₁ₐ mm, a thickness of the second annular bottom plate 322c is T_{1b} mm, an inner diameter of the receiving magnet 322 is D₁ mm, an outer diameter of the receiving magnet 322 is D₃ mm, a diameter of the second coil embedding groove 322d is D₂ mm, an axial extension length of the opening of the second coil embedding groove 322d along the tool body 1 is B₁ mm, and a depth of the second coil embedding groove 322d is E₁ mm.

In Embodiment 2, the transmitting magnet 312 and the receiving magnet 322 each have a relative permeability of u, with a vacuum permeability being u₀ H/m. A magnetic-circuit area of the second annular side plate 322a is S₁, and the magnetic-circuit area S₁ satisfies: ${S}_{1} = \frac{θ}{2} \times \left[{\left(\frac{{D}_{2}}{2}\right)}^{2}-{\left(\frac{{D}_{1}}{2}\right)}^{2}\right]$ (27)

A reluctance R_{rec} of the receiving unit 32 is expressed as follows: ${R}_{1} = \frac{{B}_{1}}{{S}_{1} \times u \times {u}_{0}} \times 1000$ (28) ${R}_{2} = \frac{ln \left(\frac{{D}_{3}}{{D}_{1}}\right)}{θ \times u \times {u}_{0} \times {T}_{1 a}} \times 1000$ (29) ${R}_{3} = \frac{ln \left(\frac{{D}_{3}}{{D}_{1}}\right)}{θ \times u \times {u}_{0} \times {T}_{1 b}} \times 1000$ (30) ${R}_{rec} = {R}_{1} + {R}_{2} + {R}_{3}$ (31)

In Embodiment 2, R₁ is a reluctance of the second annular side plate 322a, R₂ is a reluctance of the second annular top plate 322b, and R₃ is a reluctance of the second annular bottom plate 322c.

A reluctance Rₜᵣₐ of the transmitting unit 31 is expressed as follows: ${R}_{4} = \frac{{B}_{2}}{u \times {u}_{0} \times {H}_{3} \times {A}_{2}} \times 1000$ (32) ${R}_{5} = \frac{ln \left(\frac{{D}_{4} \times 0.5 + {B}_{3}}{{D}_{4} \times 0.5}\right)}{θ \times u \times {u}_{0} \times {T}_{2 a}} \times 1000$ (33) ${R}_{6} = \frac{ln \left(\frac{{D}_{4} \times 0.5 + {B}_{3}}{{D}_{4} \times 0.5}\right)}{θ \times u \times {u}_{0} \times {T}_{2 b}} \times 1000$ (34) ${R}_{tra} = {R}_{4} + {R}_{5} + {R}_{6}$ (35)

In Embodiment 2, a reluctance of the connecting side plate 312e is R₄, a reluctance of the connecting top plate 312f is R₅, and a reluctance of the connecting bottom plate 312g is R₆.

The wireless transmission mechanism 3 has an air-gap reluctance of R_{δ} H⁻¹ and an air-gap width of L mm. The air-gap reluctance R_{δ} is expressed as follows: ${R}_{δ} = {K}_{2} \times \left({R}_{7}+{R}_{8}\right)$ (36)

R₇ is an air-gap reluctance between the connecting top plate 312f and the second annular top plate 322b, R₈ is an air-gap reluctance between the connecting bottom plate 312g and the second annular bottom plate 322c, and K₂ is a reluctance correction coefficient, 0.2≤K₂≤3.

If T₁ₐ<T₂ₐ, then T₇=T₁ₐ; if T₁ₐ>T₂ₐ, then T₇=T₂ₐ; if T_{1b}<T_{2b}, then T₈=T_{1b}; and if T_{1b}>T_{2b}, then T₈=T_{2b}. R₇ and R₈ satisfy the following equations: ${F}_{m} = 1 + \frac{L}{\sqrt{{10}^{- 3} \times 0.5 \times {D}_{3} \times {T}_{m} \times θ}} \times ln \left[\frac{{10}^{5} \times 2 \times \left({E}_{1}+{E}_{2}+L\right)}{L}\right]$ (37) ${R}_{m} = \frac{1}{θ \times {u}_{0} \times a \times \left({β}_{m}-{γ}_{m}\right)} \times ln \left(\frac{\left|\frac{L - {β}_{m}}{L - {γ}_{m}}\right|}{\left(\left|\frac{- {β}_{m}}{- {γ}_{m}}\right|\right)}\right) \times \frac{7}{{F}_{m}} \times 1000$ (38)
where, m is equal to 7 or 8, and Fₘ is a fringing flux coefficient.

The parameters β and γ satisfy: ${β}_{m} = \frac{- {b}_{m} + \sqrt{{b}_{m}^{2} - 4 {ac}_{m}}}{2 a}$ (39) ${γ}_{m} = \frac{- {b}_{m} - \sqrt{{b}_{m}^{2} - 4 {ac}_{m}}}{2 a}$ (40)

The parameters a, b, and c are configured to describe an air-gap area between the connecting top plate 312f and the second annular top plate 322b and an air-gap area between the connecting bottom plate 312g and the second annular bottom plate 322c. Specifically, $a = 2 \times k$ (41) ${b}_{m} = k \times {D}_{3} + {T}_{m}$ (42) ${c}_{m} = \frac{1}{2} \times {D}_{3} \times {T}_{m}$ (43)

The parameter k is configured to describe an air-gap shape between the connecting top plate 312f and the second annular top plate 322b and an air-gap shape between the connecting bottom plate 312g and the second annular bottom plate 322c. Specifically, $k = \frac{{T}_{2 a} - {T}_{1 a}}{2 \times L}$ (44)

If T₁ₐ=T₂ₐ, then T₇=T₁ₐ; and if T_{1b}=T_{2b}, then T₈=T_{1b}. R₇ and R₈ satisfy the following equations: ${F}_{m} = 1 + \frac{L}{\sqrt{{10}^{- 3} \times 0.5 \times {D}_{3} \times {T}_{m} \times θ}} \times ln \left[\frac{{10}^{5} \times 2 \times \left({E}_{1}+{E}_{2}+L\right)}{L}\right]$ (45) ${R}_{m} = \frac{1}{θ \times {u}_{0} \times {T}_{m}} \times ln \left(\frac{{D}_{3} \times 0.5 + L}{{D}_{3} \times 0.5}\right) \times \frac{7}{{F}_{m}} \times 1000$ (46)
where, m is equal to 7 or 8.

Based on the description of the parameters a, b, c, and k, the air-gap shape and area between the connecting top plate 312f and the second annular top plate 322b and the air-gap shape and area between the connecting bottom plate 312g and the second annular bottom plate 322c can be expressed according to Eqs. (41) to (44). On this basis, according to Eqs. (37) to (38) that introduce the parameters a, b, c, and k, the air-gap reluctance between the connecting top plate 312f and the second annular top plate 322b and the air-gap reluctance between the connecting bottom plate 312g and the second annular bottom plate 322c are obtained.

The air-gap width L is a distance between the transmitting unit 31 and the receiving unit 32. Preferably, 0.1≤L≤3. Specifically, in different embodiments, the air-gap width L may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.5 mm, 2 mm, 2.5 mm, or 3 mm. Preferably, the air-gap width L is 0.4 mm, 0.5 mm, 0.6 mm, 0.7 mm, 0.8 mm, 0.9 mm, 1 mm, or 1.1 mm.

An inductance of the transmitting unit 31 is L_{dtra} H, an inductance of the receiving unit 32 is L_{drec} H, a number of turns of the transmitting coil 311 is Nₜᵣₐ, a number of turns of the receiving coil 321 is N_{rec}, the air-gap reluctance of the wireless transmission mechanism 3 is R_{δ} H⁻¹, the reluctance of the transmitting unit 31 is Rₜᵣₐ H⁻¹, and the reluctance of the receiving unit 32 is R_{rec} H⁻¹. Then: ${L}_{d tra} = \frac{{N}_{tra}^{2}}{{R}_{δ} + {R}_{rec} + {R}_{tra}}$ (47) ${L}_{d rec} = \frac{{N}_{rec}^{2}}{{R}_{δ} + {R}_{rec} + {R}_{tra}}$ (48)
where, 2≤Nₜᵣₐ≤240, 2≤N_{rec}≤240.

Furthermore, based on the above structure of the ultrasonic machining device 10 disclosed in Embodiment 2, a frequency of an electrical signal input to the receiving unit 32 is f Hz, a peak current applied to the transmitting unit 31 is Iₜᵣₐ A, a peak current applied to the receiving unit 32 is I_{rec} A, an apparent power of the transmitting unit 31 is Qₜᵣₐ VA, and an apparent power of the receiving unit 32 is Q_{rec} VA. Then the above parameters satisfy the following equations: ${Q}_{tra} = \left(2\times f\times {L}_{d tra}\times {I}_{tra}^{2}\right)$ (49) ${Q}_{rec} = \left(2\times f\times {L}_{d rec}\times {I}_{rec}^{2}\right)$ (50)

Substituting Eqs. (47) and (48) into Eqs. (49) and (50), respectively, yields the relationship between the apparent power Qₜᵣₐ of the transmitting unit 31 and the above parameters, and the relationship between the apparent power Q_{rec} of the receiving unit 32 and the above parameters in Embodiment 2: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$ (51) ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$ (52)

It should be noted that, since Eqs. (27) to (52) involve some parameters that need to be measured from the ultrasonic machining device 10, in order to avoid errors in the measured data, K₁ is set. K₁ is a correction coefficient, 0.5≤K₁≤1.5, which is configured to correct the error between the apparent powers of the transmitting unit 31 and the receiving unit 32 and an optimal apparent power caused by human errors during data measurement, such as the measurement error of the frequency of the electrical signal input to the receiving unit and the measurement error of the peak current. Typically, the measurement error of the frequency of the electrical signal is about 15%, and the measurement error of the peak current is about 20%. Therefore, it can be understood that when there is no error in the measured parameters, preferably, K₁=1.

Specifically, in order to verify that when the structural parameters of the receiving unit 32 and the transmitting unit 31 of the ultrasonic machining device 10 provided in Embodiment 2 of the present disclosure satisfy the above equations, i.e., when the structural parameters of the receiving unit 32 and the transmitting unit 31 are matched with the applied peak currents and the apparent powers, compared with conventional ultrasonic machining devices 10, the receiving unit 32 and the transmitting unit 31 of Embodiment 2 of the present disclosure achieve a lower temperature rise rate in the operating state, and the machining tool 20 achieves an amplitude increase substantially consistent with the increase in the apparent power, two groups of tests are conducted, with reference to the following tables:

In Table 3A and Table 3B, a third ultrasonic machining device based on the structure of the ultrasonic machining device 10 described above is tested, and in combination with Eqs. (27) to (52), the apparent power Q₅ₜᵣₐ of the transmitting unit 31 and the apparent power Q_{5rec} of the receiving unit 32 are obtained: ${Q}_{5 tra} = \left[\frac{2 \times f \times {N}_{tra}^{2} \times {I}_{tra}^{2}}{{R}_{δ} + {R}_{rec} + {R}_{tra}}\right]$ ${Q}_{5 rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting ranges of Q₅ₜᵣₐ and Q_{5rec} are obtained. After the current is applied to the third ultrasonic machining device, the temperature rise of the third ultrasonic machining device during operation for a preset time t is measured under the condition that the transmitting unit 31 operates at an apparent power Q₆ₜᵣₐ and the receiving unit 32 operates at an apparent power Q_{6rec}. Q₆ₜᵣₐ is within the setting range of Q₅ₜᵣₐ, and Q_{6rec} is within the setting range of Q_{5rec}. Specifically, 0.5≤K₁≤1.5.

Meanwhile, referring to Table 4A and Table 4B, a fourth ultrasonic machining device is provided. Based on the structures of the transmitting unit 31 and the receiving unit 32 of the fourth ultrasonic machining device, according to Eqs. (27) to (52), the apparent power Q₇ₜᵣₐ of the transmitting unit 31 and the apparent power Q_{7rec} of the receiving unit 32 of the fourth ultrasonic machining device are obtained: ${Q}_{7 tra} = \left[\frac{2 \times f \times {N}_{tra}^{2} \times {I}_{tra}^{2}}{{R}_{δ} + {R}_{rec} + {R}_{tra}}\right]$ ${Q}_{7 rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting ranges of Q₇ₜᵣₐ and Q_{7rec} are obtained.

After the current is applied to the fourth ultrasonic machining device, the temperature rise of the fourth ultrasonic machining device during operation for a preset time t is measured under the condition that the transmitting unit 31 operates at an apparent power Q₈ₜᵣₐ and the receiving unit 32 operates at an apparent power Q_{8rec}. Q₈ₜᵣₐ is not within the setting range of Q₇ₜᵣₐ, and Q_{8rec} is not within the setting range of Q_{7rec}.

The test method is as follows:
The ambient temperature is 24°C, and the air-gap width L between the transmitting unit 31 and the receiving unit 32 of each of the third ultrasonic machining device and the fourth ultrasonic machining device is set to 0.2 mm. The transmitting unit 31 is connected to an ultrasonic generator, and the receiving unit 32 is connected to the ultrasonic transducer 2. The receiving unit 32 and the transmitting unit 31 are connected to a Yokogawa power oscilloscope to acquire the applied peak currents Iₜᵣₐ and I_{rec} and the apparent powers Qₜᵣₐ and Q_{rec}. The frequency f of the electrical signal input to the receiving unit 32 is detected using a Tektronix oscilloscope.

**Table 3A**

| Third ultrasonic machining device | | | | |
|---|---|---|---|---|
| f=21800 Hz; R_{δ}=1985465 H⁻¹; R_{rec}=16905 H⁻¹; Rₜᵣₐ=56054 H⁻¹; L=0.2 mm | | | | |
| Test ambient temperature: 24°C; Preset operating time t: 10 min | | | | |
| Transmitting unit N=15 | | | | |
| Iₜᵣₐ (A) | Range of Q₅ₜᵣₐ (VA) | Q₆ₜᵣₐ (VA) | Temperature of transmitting unit (°C) | Amplitude of machining tool (µm) |
| 2.5 | 16.4-43 | 30 | 23.0 | 9.7 |
| | | | 29.0 | |
| | | | 34.0 | |
| | | | 39.0 | |
| | | | 49.0 | |
| 1.9 | 9.5-25 | 17 | 23.0 | 5.6 |
| | | | 26.0 | |
| | | | 31.0 | |
| | | | 36.0 | |
| | | | 40.0 | |
| 1.23 | 4-10.5 | 7.2 | 22.9 | 2.5 |
| | | | 25.0 | |
| | | | 28.0 | |
| | | | 32.0 | |
| | | | 37.0 | |

**Table 3B**

| Third ultrasonic machining device | | | | |
|---|---|---|---|---|
| f=21800 Hz; R_{δ}=1985465 H⁻¹; R_{rec}=16905 H⁻¹; Rₜᵣₐ=56054 H⁻¹; L=0.2 mm | | | | |
| Test ambient temperature: 24°C; Preset operating time t: 10 min | | | | |
| Receiving unit N=65 | | | | |
| I_{rec} (A) | Range of Q_{1rec} (VA) | Q_{2rec} (VA) | Temperature of receiving unit (°C) | Amplitude of machining tool (µm) |
| 0.9 | 39.9-105 | 72 | 23.0 | 9.7 |
| | | | 32.0 | |
| | | | 36.0 | |
| | | | 43.0 | |
| | | | 52.0 | |
| 0.65 | 20.8-54.9 | 37 | 23.0 | 5.6 |
| | | | 28.0 | |
| | | | 32.0 | |
| | | | 37.0 | |
| | | | 42.0 | |
| 0.35 | 6-15.9 | 11 | 23.0 | 2.5 |
| | | | 28.0 | |
| | | | 30.0 | |
| | | | 35.0 | |
| | | | 39.0 | |

**Table 4A**

| Fourth ultrasonic machining device | | | | |
|---|---|---|---|---|
| f=16500 Hz; R_{δ}=768608 H⁻¹; R_{rec}=9696 H⁻¹; Rₜᵣₐ=35992 H⁻¹; L=0.2 mm | | | | |
| Test ambient temperature: 24°C; Preset operating time t: 10 min | | | | |
| Transmitting unit N=15 | | | | |
| Iₜᵣₐ (A) | Range of Q₇ₜᵣₐ (VA) | Q₈ₜᵣₐ (VA) | Temperature of transmitting unit (°C) | Amplitude of machining tool (µm) |
| | | | 21.5 | |
| 1.85 | 17.2-45 | 50 | 38.0 | 1.5 |
| | | | 50.0 | |
| | | | 63.0 | |
| | | | 72.0 | |
| *1.55* | 12-31.8 | 34 | 21.0 | 1.05 |
| | | | 33.0 | |
| | | | 41.0 | |
| | | | 52.0 | |
| | | | 63.0 | |
| 1.1 | 6-16 | 18 | 22.5 | 0.6 |
| | | | 30.0 | |
| | | | 38.0 | |
| | | | 45.0 | |
| | | | 51.0 | |

**Table 4B**

| Fourth ultrasonic machining device | | | | |
|---|---|---|---|---|
| f=16500 Hz; R_{δ}=768608 H⁻¹; R_{rec}=9696 H⁻¹; Rₜᵣₐ=35992 H⁻¹; L=0.2 mm | | | | |
| Test ambient temperature: 24°C; Preset operating time t: 10 min | | | | |
| Receiving unit N=65 | | | | |
| I_{rec} (A) | Range of Q_{7rec} (VA) | Q_{8rec} (VA) | Temperature of receiving unit (°C) | Amplitude of machining tool (µm) |
| *0.55* | 28.5-75 | 26 | 21.5 | 1.5 |
| | | | 32.0 | |
| | | | 43.0 | |
| | | | 53.0 | |
| | | | 61.0 | |
| 0.45 | 19-50.3 | 17 | 21.0 | 1.05 |
| | | | 29.0 | |
| | | | 36.0 | |
| | | | 48.0 | |
| | | | 59.0 | |
| 0.35 | 11.5-30.4 | 10.5 | 22.5 | 0.6 |
| | | | 26.0 | |
| | | | 32.0 | |
| | | | 39.0 | |
| | | | 48.0 | |

It should be noted that Table 3A and Table 3B show the temperature rise data of the receiving unit 32 and the transmitting unit 31, and the amplitude data generated by the attached machining tool 20 when different magnitudes of peak currents are applied and continuous operation lasts for a preset time of 10 min at the preset ambient temperature, for the third ultrasonic machining device designed in accordance with Eqs. (51) and (52) of the present disclosure. Table 4A and Table 4B show the temperature rise data of the receiving unit 32 and the transmitting unit 31, and the amplitude data generated by the attached machining tool 20 when different magnitudes of currents are applied and continuous operation lasts for a preset time of 10 min at the preset ambient temperature, for the fourth ultrasonic machining device not designed in accordance with Eqs. (51) and (52) of the present disclosure.

It can be seen from Table 3A and Table 3B that when the structural parameters of the transmitting unit 31 and the receiving unit 32 are matched with the frequency of the electrical signal input to the receiving unit 32, i.e., when the structure of the ultrasonic machining device satisfies Eqs. (51) and (52) of the present disclosure, the structural parameters and performance of the transmitting unit 31 and the receiving unit 32 are matched with the applied peak currents and the apparent powers. Thus, during operation of the ultrasonic machining device, the energy of the wireless transmission mechanism 3 is better converted into mechanical vibration, thereby improving the transmission efficiency of the wireless transmission mechanism 3 in the operating state, reducing the temperature rise of the wireless transmission mechanism 3 in the operating state, and improving the continuous operation stability of the device. Furthermore, the increase in the amplitude of the machining tool 20 mounted on the tool body 1 is substantially consistent with the increase in the apparent power of the wireless transmission mechanism 3, thereby helping prevent the energy from being dissipated as heat and enabling the wireless transmission mechanism 3 to operate with higher energy conversion efficiency.

It can be seen from Table 4A and Table 4B that when the structural parameters of the transmitting unit 31 and the receiving unit 32 are not matched with the frequency of the electrical signal input to the receiving unit 32, i.e., when the transmitting unit 31 and the receiving unit 32 of the fourth ultrasonic machining device do not satisfy Eqs. (51) and (52) of the present disclosure, during operation of such a fourth ultrasonic machining device, a higher proportion of the energy of the wireless transmission mechanism 3 is dissipated as heat. As a result, the temperature rise rate of such a fourth ultrasonic machining device is significantly higher than that of the third ultrasonic machining device shown in Table 1A and Table 1B. Moreover, the increase in the amplitude generated by the machining tool 20 of such a fourth ultrasonic machining device differs greatly from the increase in the apparent power. Accordingly, when the apparent power of such a fourth ultrasonic machining device increases, the amplitude change of the machining tool 20 lags behind and changes only slightly, and the overall effective energy conversion efficiency of the wireless transmission mechanism 3 is relatively low.

It should be noted that in Embodiment 2, the transmitting magnet 312 and the receiving magnet 322 of each of the third ultrasonic machining device and the fourth ultrasonic machining device are made of manganese-zinc ferrite material, with a relative permeability u of 2500. In other implementations, the transmitting magnet 312 can be made of any one material selected from a group consisting of ferrite, neodymium iron boron, high-frequency ceramic material, powder metallurgy material, amorphous and nanocrystalline alloys, and cobalt iron, and the receiving magnet 322 can be made of any one material selected from a group consisting of ferrite, neodymium iron boron, high-frequency ceramic material, powder metallurgy material, amorphous and nanocrystalline alloys, and cobalt iron. Based on the above equations, according to the materials used for preparing the transmitting magnet 312 and the receiving magnet 322, the relative permeability u of the corresponding material is introduced.

It should be noted that in Embodiment 2, the apparent powers Q₆ₜᵣₐ, Q_{6rec}, and Q₈ₜᵣₐ, Q_{8rec}, as well as peak currents Iₜᵣₐ and I_{rec} in the third ultrasonic machining device and the fourth ultrasonic machining device are all measured by a Yokogawa power oscilloscope (model: PX8000), with the measurement method being the same as described in Embodiment 1. The frequency f of the electrical signal input to the receiving unit 32 in the third ultrasonic machining device and the fourth ultrasonic machining device is measured by a Tektronix oscilloscope (model: MDO3204), with the measurement method being the same as described in Embodiment 1.

In addition, in Embodiment 2, the machining tool 20 used by the third ultrasonic machining device and the fourth ultrasonic machining device is a D6 flat-end mill with an overhang length of 20 mm. It should be noted that the above test method may also be performed with other machining tools 20 with corresponding overhang lengths. For example, the machining tool 20 may be a D4 cemented carbide rod with an overhang length of 20 mm, or a D16 flat-end mill with an overhang length of 50 mm.

### Embodiment 3

Referring to FIGS. 1 to 16, based on the ultrasonic machining device 10 of Embodiment 1 or Embodiment 2, Embodiment 3 provides an ultrasonic spindle 100, which specifically includes a first rotary output unit 110, a machining tool 20, and the ultrasonic machining device 10 of Embodiment 1 or Embodiment 2.

Specifically, referring to FIGS. 1 to 12, Embodiment 3 is described in detail based on the ultrasonic machining device 10 of Embodiment 1. the outer periphery of the tool body 1 extends radially outward to form a first limiting member 12, and a rear end surface of the receiving unit 32 abuts against a front end surface of the first limiting member 12. A front end surface of the receiving unit 32 is connected to a second limiting member 35, and the second limiting member 35 is disposed around the tool body 1, such that a second accommodating groove 34 for accommodating the receiving unit 32 is formed between the first limiting member 12 and the second limiting member 35. When the receiving unit 32 is sleeved on the outer periphery of the tool body 1, the receiving magnet 322 abuts against the second limiting member 35, thereby defining a relative position between the receiving magnet 322 and the tool body 1. Thus, the weight distribution of the tool body 1 with the receiving unit 32 mounted thereon along the axial direction meets the design specifications, thereby improving the operation stability of the ultrasonic machining device 10 during machining.

In Embodiment 3, a front end of the first rotary output unit 110 is connected to a lock ring 111, and the lock ring 111 is connected to the transmitting mount 33 via a spacer 112. The transmitting mount 33 is disposed around the outer periphery of the tool body 1. An end surface of the transmitting mount 33 facing the tool body 1 is provided with a first accommodating groove 331, and the transmitting magnet 312 is accommodated in the first accommodating groove 331. In other embodiments, a bracket may be used to externally mount the transmitting unit to other equipment, and the transmitting mount 33 is connected to the bracket, and may be integrally formed with the bracket. The specific assembly structure will not be described again here.

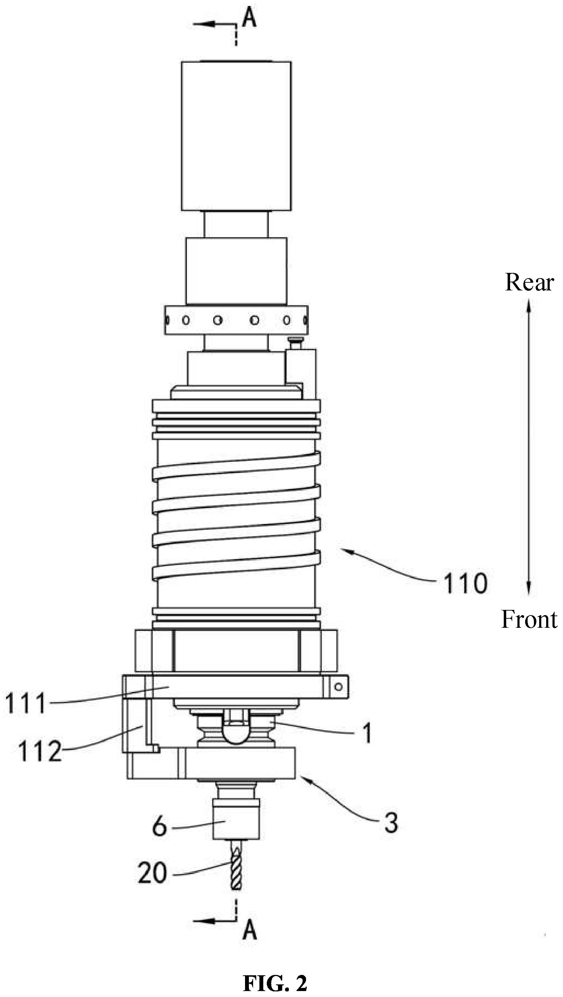

Specifically, referring to FIGS. 1 and 2, the rear end of the tool body 1 in this embodiment is configured to be connected to the first rotary output unit 110, and the front end thereof is provided with a mounting cavity 11 configured to accommodate the ultrasonic transducer 2. The ultrasonic transducer 2 is disposed in the mounting cavity 11, and is electrically connected to the receiving unit 32.

The ultrasonic transducer 2 in Embodiment 3 includes a piezoelectric vibrator 21, a screw rod 22, and a rear cover 23. The ultrasonic machining device 10 of this embodiment further includes a horn 24. The screw rod 22 is disposed in the mounting cavity 11, and extends along the axial direction of the tool body 1. A rear end of the horn 24 extends into the mounting cavity 11, and is fixedly connected to the screw rod 22. The piezoelectric vibrator 21 is sleeved on an outer peripheral side of the screw rod 22. A rear end surface of the horn 24 protrudes outward beyond an outer peripheral surface of the screw rod 22 along a radial direction of the screw rod 22 to form an abutment surface. Thus, when the rear cover 23 is threaded onto the screw rod 22 from the rear end of the screw rod 22 and threadedly connected to the screw rod 22, it can cooperate with the abutment surface to define the position of the piezoelectric vibrator 21 relative to the screw rod 22.

Preferably, the horn 24 and the screw rod 22 in Embodiment 3 are integrally formed, thereby improving the overall strength of the horn 24 and the screw rod 22, enabling stable output of vibration at a preset frequency for a longer time under the action of the piezoelectric vibrator 21.

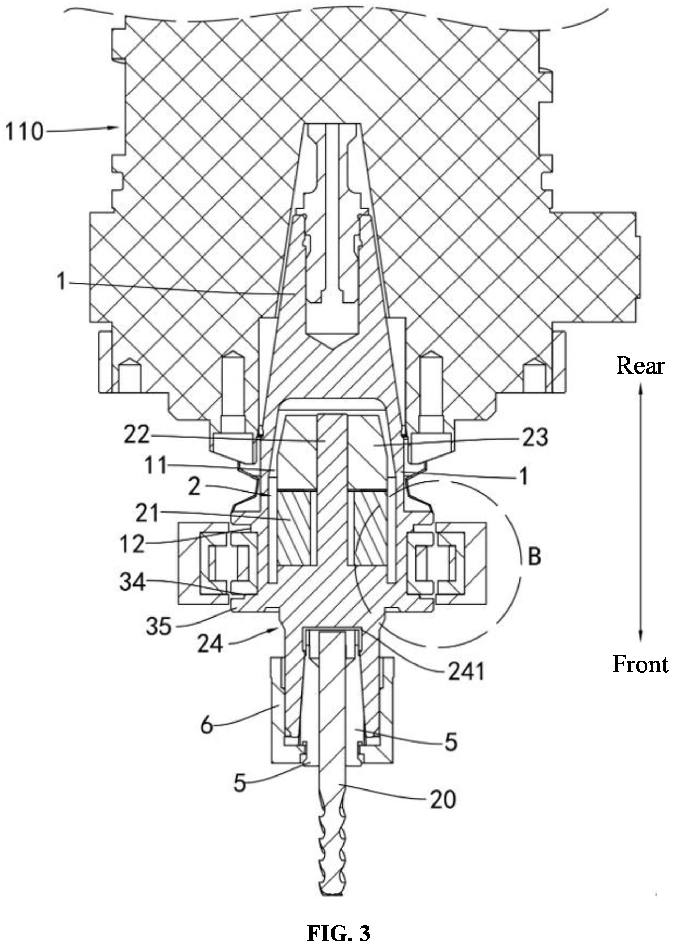

Referring to FIG. 3, in order to fix the machining tool 20 to the horn 24, the ultrasonic machining device 10 of Embodiment 3 further includes a collet 5 and a nut 6. A front end of the horn 24 is provided with an insertion bore 241 extending rearward. The collet 5 can be sleeved on the outer periphery of the machining tool 20 and inserted together with the machining tool 20 into the insertion bore 241. Specifically, an inner peripheral surface of the insertion bore 241 in Embodiment 3 is tapered with a diameter gradually decreasing from front to rear. The collet 5 is provided with a conical section 51 matching the tapered insertion bore 241. When the collet 5 and the machining tool 20 are inserted into the insertion bore 241, the inner peripheral surface of the insertion bore 241 can abut against the collet 5, causing the collet 5 to deform and clamp the machining tool 20. Furthermore, in order to fix the machining tool 20 relative to the horn 24 when inserted into a preset position of the insertion bore 241, the nut 6 is sleeved on an outer periphery of the collet 5, and the nut 6 is threadedly connected to the horn 24. Thus, the nut 6 can abut against a front end of the collet 5 to prevent the collet 5 from moving forward, such that the machining tool 20 is stably assembled to the horn 24.

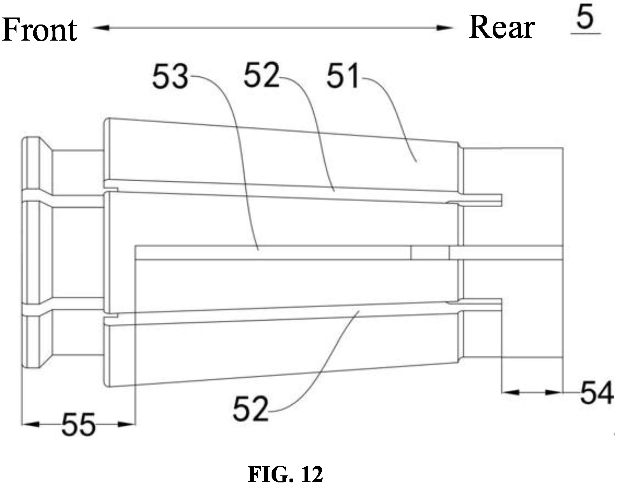

Furthermore, referring to FIG. 12, the collet 5 in Embodiment 3 includes the conical section 51 cooperating with the insertion bore. The collet 5 is provided with a plurality of first deformation grooves 52 arranged at intervals along its circumferential direction. Specifically, the plurality of first deformation grooves 52 are uniformly distributed along the circumferential direction of the collet 5, such that their deformation is uniformly distributed along the circumferential direction. The plurality of first deformation grooves 52 extend to or through the conical section 51. Thus, when the collet 5 is pushed into the insertion bore, a certain amount of deformation is generated via the plurality of first deformation grooves 52, thereby deforming and clamping the machining tool. Meanwhile, by virtue of the inherent elastic properties of the material, the collet can be elastically restored after being disassembled from the horn 24 for repeated use.

The plurality of first deformation grooves 52 penetrate through an outer side surface and an inner side surface of the collet 5. The plurality of first deformation grooves 52 extend rearward from a front end surface of the collet 5 along the axial direction of the collet 5, pass through the conical section 51, and extend toward a rear end surface of the collet 5. A first gap 54 is provided between a rear groove surface of each of the plurality of first deformation grooves 52 and the rear end surface of the collet 5. Specifically, a width of the first gap 54 is greater than zero, such that the collet 5 has sufficient deformation capability while maintaining sufficient strength for clamping the machining tool.

Furthermore, the collet 5 is provided with a plurality of second deformation grooves 53 arranged at intervals along its circumferential direction. The plurality of second deformation grooves 53 extend to or through the conical section 51. The plurality of second deformation grooves 53 are spaced from and staggered with the plurality of first deformation grooves 52. Specifically, one second deformation groove 53 is disposed between every two adjacent first deformation grooves 52, such that the collet 5 is uniformly stressed during deformation.

In Embodiment 3, a second gap 55 is provided between a front groove surface of each of the plurality of second deformation grooves 53 and the front end surface of the collet 5, and a rear groove surface of each of the plurality of second deformation grooves 53 is flush with the rear end surface of the collet. The first gap 54 and the second gap 55 each have a width of greater than zero.

Specifically, in different embodiments, the machining tool 20 may be a cutter head, an end mill, a grinding tool, or other tools.

Based on the above ultrasonic spindle 100, Embodiment 3 of the present disclosure further provides an ultrasonic machine tool. The ultrasonic machine tool includes a machine tool body (not shown in the figures) and the above ultrasonic spindle 100. The ultrasonic spindle 100 is mounted on the machine tool body.

### Embodiment 4

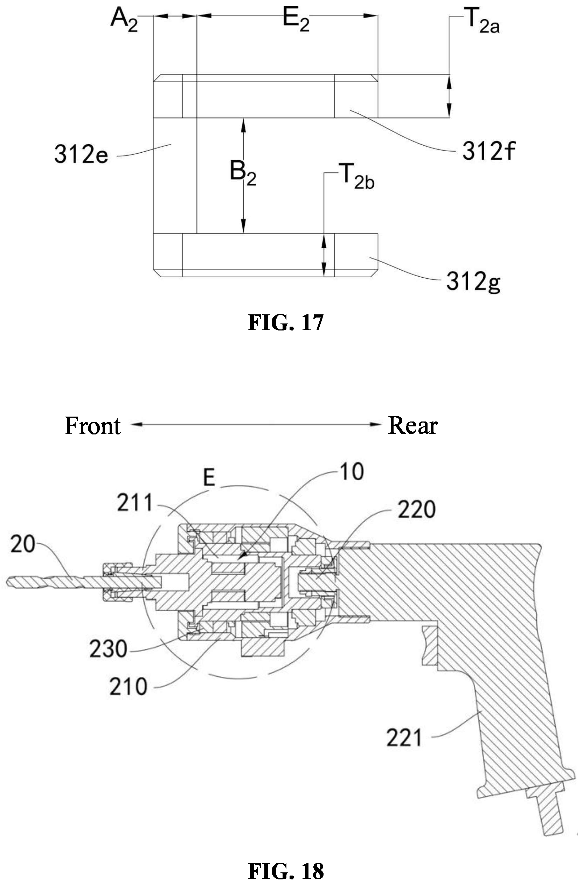

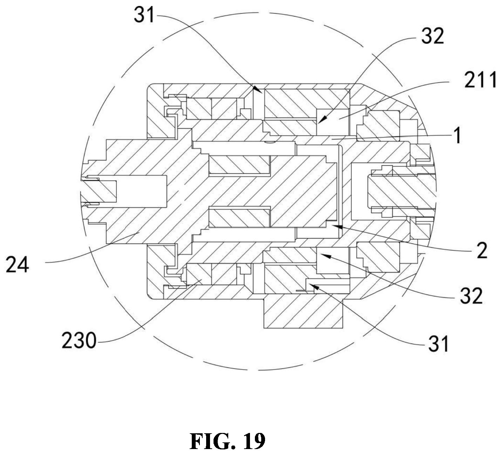

Referring to FIGS. 18 and 19, based on the ultrasonic machining device 10 of Embodiment 1 or Embodiment 2, Embodiment 4 provides an ultrasonic drill 200, including a housing 210, a second rotary output unit 220, a machining tool 20, a bearing 230, and the ultrasonic machining device 10.

A front end surface of the housing 210 is provided with an accommodating cavity 211 extending rearward. A rear end of the tool body 1 is accommodated in the accommodating cavity 211 and connected to an output end of the second rotary output unit 220. The tool body 1 is connected to the housing 210 via the bearing 230. The ultrasonic machining device 10 is disposed in the accommodating cavity 211 and connected to the housing 210. Specifically, the machining tool 20 is connected to the ultrasonic transducer 2 via a horn 24.

Specifically, in Embodiment 4, the ultrasonic machining device 10 includes a tool body 1, an ultrasonic transducer 2, and a wireless transmission mechanism 3. The rear end of the tool body 1 is assembled to a second rotary output unit 220 and rotates synchronously with the second rotary output unit 220, and the wireless transmission mechanism 3 is disposed on an outer peripheral side of the tool body 1.

In Embodiment 4, the wireless transmission mechanism 3 includes a transmitting unit 31 and a receiving unit 32. Specifically, the transmitting unit 31 is in the form of a full ring or a partial ring disposed around the outer periphery of the tool body 1. It can be understood that the transmitting magnet 312 extends around the outer peripheral side of the tool body 1 by an angle of 0, $\frac{π}{4} \leq θ \leq 2 π$. Preferably, $θ = \frac{π}{3} , θ = \frac{π}{2}$, *θ* = *π, θ* = 2*π.* Specifically, θ is a central angle corresponding to the circumferential extension of the transmitting coil 311 along the tool body 1.

Specifically, in Embodiment 4, the second rotary output unit 220 further includes a grip handle 221 formed by an extension, and the housing 210 is fixedly connected to the second rotary output unit 220, such that the relative position between the ultrasonic machining device 10 and the second rotary output unit 220 is stable.

The specification discloses the present disclosure with the drawings, and also enables those skilled in the art to practice the present disclosure, including making and using any devices or systems, using appropriate materials and performing any incorporated methods. The scope of the present disclosure is defined by the claimed technical solutions, and includes other embodiments that would occur to those skilled in the art. Such other embodiments shall be deemed to fall within the scope of protection defined by the technical solution claimed in the present disclosure, provided that they include structural elements that are not different from the literal language of the claimed technical solution, or that they contain equivalent structural elements that have no substantial difference from the literal language of the claimed technical solution.

## Claims

1. A radial-nested-ring ultrasonic machining device, comprising:
a tool body, wherein the tool body is internally provided with an ultrasonic transducer;
a wireless transmission mechanism, wherein the wireless transmission mechanism comprises a transmitting unit and a receiving unit; the receiving unit is disposed on an outer peripheral side of the tool body, and the transmitting unit is disposed on an outer peripheral side of the receiving unit; the transmitting unit and the receiving unit are arranged opposite each other and form an air gap; the transmitting unit comprises a transmitting coil and a transmitting magnet configured to generate a magnetic field based on a current in the transmitting coil; and the receiving unit comprises a receiving coil and a receiving magnet configured to receive the magnetic field generated by the transmitting unit; and
the ultrasonic transducer, wherein the ultrasonic transducer is electrically connected to the receiving unit;
wherein, a frequency of an electrical signal input to the receiving unit is f Hz, an air-gap reluctance of the wireless transmission mechanism is R_{δ} H⁻¹, a reluctance of the transmitting unit is Rₜᵣₐ H⁻¹, and a reluctance of the receiving unit is R_{rec} H⁻¹;
a number of turns of the transmitting coil is Nₜᵣₐ, an apparent power of the transmitting unit is Qₜᵣₐ VA, and a peak current applied to the transmitting unit is Iₜᵣₐ A; and a following equation holds: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$
a number of turns of the receiving coil is N_{rec}, an apparent power of the receiving unit is Q_{rec} VA, and a peak current applied to the receiving unit is I_{rec} A; and a following equation holds: ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$
wherein, the number of turns satisfies: 2≤Nₜᵣₐ≤240 and 2≤N_{rec}≤240; and K₁ is a correction coefficient, 0.5≤K₁≤1.5.

2. The radial-nested-ring ultrasonic machining device according to claim 1, wherein the transmitting unit extends around the outer peripheral side of the tool body by an angle of θ radians, $\frac{π}{4} \leq θ \leq 2 π$

3. The radial-nested-ring ultrasonic machining device according to claim 2, wherein in response to that θ=2π, an end surface of the transmitting magnet facing the receiving unit is provided with a first coil embedding groove disposed around the tool body; the transmitting coil is accommodated in the first coil embedding groove; the transmitting magnet comprises a first annular side plate, a first annular top plate, and a first annular bottom plate; the first annular top plate is connected to a rear side of the first annular side plate, and the first annular bottom plate is connected to a front side of the first annular side plate; the first annular side plate, the first annular top plate, and the first annular bottom plate form the first coil embedding groove with an opening facing the receiving unit; and a thickness of the first annular top plate is T₂ₐ mm, a thickness of the first annular bottom plate is T_{2b} mm, an inner diameter of the transmitting magnet is D₄ mm, an outer diameter of the transmitting magnet is D₆ mm, the opening of the first coil embedding groove has a length of B₂ mm along an axial direction of the tool body, a depth of the first coil embedding groove is E₂ mm, and a diameter of the first coil embedding groove is D₅ mm;
an end surface of the receiving magnet facing the transmitting unit is provided with a second coil embedding groove disposed around the tool body; the receiving coil is accommodated in the second coil embedding groove; the receiving magnet comprises a second annular side plate, a second annular top plate, and a second annular bottom plate; the second annular top plate is connected to a rear side of the second annular side plate, and the second annular bottom plate is connected to a front side of the second annular side plate; the second annular side plate, the second annular top plate, and the second annular bottom plate form the second coil embedding groove with an opening facing the transmitting unit; and a thickness of the second annular top plate is T₁ₐ mm, a thickness of the second annular bottom plate is T_{1b} mm, an inner diameter of the receiving magnet is D₁ mm, an outer diameter of the receiving magnet is D₃ mm, a diameter of the second coil embedding groove is D₂ mm, the opening of the second coil embedding groove has a length of B₁ mm along the axial direction of the tool body, and a depth of the second coil embedding groove is E₁ mm;
the transmitting magnet and the receiving magnet each have a relative permeability of u and a vacuum permeability of u₀ H/m; the second annular side plate has a magnetic-circuit area of S₁; and S₁ satisfies: ${S}_{1} = π \left[{\left(\frac{{D}_{2}}{2}\right)}^{2}-{\left(\frac{{D}_{1}}{2}\right)}^{2}\right]$
the reluctance R_{rec} of the receiving unit is expressed as follows: ${R}_{1} = \frac{{B}_{1}}{{S}_{1} \times u \times {u}_{0}} \times 1000$ ${R}_{2} = \frac{ln \left(\frac{{D}_{3}}{{D}_{1}}\right)}{u \times {u}_{0} \times 2 \times π \times {T}_{1 a}} \times 1000$ ${R}_{3} = \frac{ln \left(\frac{{D}_{3}}{{D}_{1}}\right)}{u \times {u}_{0} \times 2 \times π \times {T}_{1 b}} \times 1000$ ${R}_{rec} = {R}_{1} + {R}_{2} + {R}_{3}$
wherein, R₁ is a reluctance of the second annular side plate, R₂ is a reluctance of the second annular top plate, and R₃ is a reluctance of the second annular bottom plate;
the reluctance Rₜᵣₐ of the transmitting unit is expressed as follows: ${R}_{4} = \frac{{B}_{2}}{u \times {u}_{0} \times π \times \left[{\left(\frac{{D}_{6}}{2}\right)}^{2}-{\left(\frac{{D}_{5}}{2}\right)}^{2}\right]} \times 1000$ ${R}_{5} = \frac{ln \left(\frac{{D}_{6}}{{D}_{4}}\right)}{2 \times π \times u \times {u}_{0} \times {T}_{2 a}} \times 1000$ ${R}_{6} = \frac{ln \left(\frac{{D}_{6}}{{D}_{4}}\right)}{2 \times π \times u \times {u}_{0} \times {T}_{2 b}} \times 1000$ ${R}_{tra} = {R}_{4} + {R}_{5} + {R}_{6}$
wherein, R₄ is a reluctance of the first annular side plate, R₅ is a reluctance of the first annular top plate, and R₆ is a reluctance of the first annular bottom plate.

4. The radial-nested-ring ultrasonic machining device according to claim 3, wherein an air-gap width is L mm; and the air-gap reluctance R_{δ} satisfies: ${R}_{δ} = {K}_{2} \times \left({R}_{7}+{R}_{8}\right)$
wherein, R₇ is an air-gap reluctance between the first annular top plate and the second annular top plate, R₈ is an air-gap reluctance between the first annular bottom plate and the second annular bottom plate, and K₂ is a reluctance correction coefficient, 0.2≤K₂≤3; and based on structural parameters of the transmitting magnet and the receiving magnet:
in response to that T₁ₐ<T₂ₐ, then T₇=T₁ₐ; in response to that T₁ₐ>T₂ₐ, then T₇=T₂ₐ; in response to that T_{1b}<T_{2b}, then Tₐ=T_{1b}; in response to that T_{1b}>T_{2b}, then T₈=T_{2b}; and R₇ and R₈ satisfy following equations: ${F}_{m} = 1 + \frac{L}{\sqrt{{10}^{- 3} \times {D}_{3} \times {T}_{m} \times π}} \times ln \left[\frac{{10}^{5} \times 2 \times \left({E}_{1}+{E}_{2}+L\right)}{L}\right]$ ${R}_{m} = \frac{1}{2 \times π \times {u}_{0} \times a \times \left({β}_{m}-{γ}_{m}\right)} \times ln \left(\frac{\left|\frac{L - {β}_{m}}{L - {γ}_{m}}\right|}{\left(\left|\frac{- {β}_{m}}{- {γ}_{m}}\right|\right)}\right) \times \frac{10}{{F}_{m}} \times 1000$
wherein, m is equal to 7 or 8, and parameters β, γ, and a satisfy: ${β}_{m} = \frac{- {b}_{m} + \sqrt{{b}_{m}^{2} - 4 {ac}_{m}}}{2 a}$ ${γ}_{m} = \frac{- {b}_{m} - \sqrt{{b}_{m}^{2} - 4 {ac}_{m}}}{2 a}$ $a = 2 \times k$ ${b}_{m} = k \times {D}_{3} + {T}_{m}$ ${c}_{m} = \frac{1}{2} \times {D}_{3} \times {T}_{m}$ $k = \frac{{T}_{2 a} - {T}_{1 a}}{2 \times L}$
in response to that T₁ₐ=T₂ₐ, then T₇=T₁ₐ; in response to that T_{1b}=T_{2b}, then T₈=T_{1b}; and R₇ and R₈ satisfy following equations: ${F}_{m} = 1 + \frac{L}{\sqrt{{10}^{- 3} \times {D}_{3} \times {T}_{m} \times π}} \times ln \left[\frac{{10}^{5} \times 2 \times \left({E}_{1}+{E}_{2}+L\right)}{L}\right]$ ${R}_{m} = \frac{1}{2 \times π \times {u}_{0} \times {T}_{m}} \times ln \left(\frac{{D}_{3} \times 0.5 + L}{{D}_{3} \times 0.5}\right) \times \frac{10}{{F}_{m}} \times 1000 .$

5. The radial-nested-ring ultrasonic machining device according to claim 2, wherein in response to that $\frac{π}{4} \leq θ < 2 π$, an end surface of the transmitting magnet facing the receiving unit is provided with a first coil embedding groove disposed around the tool body; the transmitting coil is accommodated in the first coil embedding groove; the transmitting magnet comprises a connecting side plate, a connecting top plate, and a connecting bottom plate; the connecting top plate is connected to a rear side of the connecting side plate; an end surface of the connecting top plate facing the receiving unit is provided with a top arc surface matched with the receiving unit; the connecting bottom plate is connected to a front side of the connecting side plate; an end surface of the connecting bottom plate facing the receiving unit is provided with a bottom arc surface matched with the receiving unit; and the connecting side plate, the connecting top plate, and the connecting bottom plate form the first coil embedding groove with an opening facing the receiving unit;
a thickness of the connecting side plate is A₂ mm, a length of the connecting side plate is H₃ mm, a thickness of the connecting top plate is T₂ₐ mm, a thickness of the connecting bottom plate is T_{2b} mm, a minimum value among distances from an outermost edge of the transmitting magnet to an inner arc surface of the transmitting magnet is B₃ mm, an inner diameter of the transmitting magnet is D₄ mm, the opening of the first coil embedding groove has a length of B₂ mm along an axial direction of the tool body, and a depth of the first coil embedding groove is E₂ mm;
an end surface of the receiving magnet facing the transmitting unit is provided with a second coil embedding groove disposed around the tool body; the receiving coil is accommodated in the second coil embedding groove; the receiving magnet comprises a second annular side plate, a second annular top plate, and a second annular bottom plate; the second annular top plate is connected to a rear side of the second annular side plate, and the second annular bottom plate is connected to a front side of the second annular side plate; and the second annular side plate, the second annular top plate, and the second annular bottom plate form the second coil embedding groove with an opening facing the transmitting unit;
a thickness of the second annular top plate is T₁ₐ mm, a thickness of the second annular bottom plate is T_{1b} mm, an inner diameter of the receiving magnet is D₁ mm, an outer diameter of the receiving magnet is D₃ mm, a diameter of the second coil embedding groove is D₂ mm, the opening of the second coil embedding groove has a length of B₁ mm along the axial direction of the tool body, and a depth of the second coil embedding groove is E₁ mm;
the transmitting magnet and the receiving magnet each have a relative permeability of u and a vacuum permeability of u₀ H/m; the second annular side plate has a magnetic-circuit area of S₁; and S₁ satisfies: ${S}_{1} = \frac{θ}{2} \times \left[{\left(\frac{{D}_{2}}{2}\right)}^{2}-{\left(\frac{{D}_{1}}{2}\right)}^{2}\right]$
the reluctance R_{rec} of the receiving unit is expressed as follows: ${R}_{1} = \frac{{B}_{1}}{{S}_{1} \times u \times {u}_{0}} \times 1000$ ${R}_{2} = \frac{ln \left(\frac{{D}_{3}}{{D}_{1}}\right)}{θ \times u \times {u}_{0} \times {T}_{1 a}} \times 1000$ ${R}_{3} = \frac{ln \left(\frac{{D}_{3}}{{D}_{1}}\right)}{θ \times u \times {u}_{0} \times {T}_{1 b}} \times 1000$ ${R}_{rec} = {R}_{1} + {R}_{2} + {R}_{3}$
wherein, R₁ is a reluctance of the second annular side plate, R₂ is a reluctance of the second annular top plate, and R₃ is a reluctance of the second annular bottom plate;
the reluctance Rₜᵣₐ of the transmitting unit is expressed as follows: ${R}_{4} = \frac{{B}_{2}}{u \times {u}_{0} \times {H}_{3} \times {A}_{2}} \times 1000$ ${R}_{5} = \frac{ln \left(\frac{{D}_{4} \times 0.5 + {B}_{3}}{{D}_{4} \times 0.5}\right)}{θ \times u \times {u}_{0} \times {T}_{2 a}} \times 1000$ ${R}_{6} = \frac{ln \left(\frac{{D}_{4} \times 0.5 + {B}_{3}}{{D}_{4} \times 0.5}\right)}{θ \times u \times {u}_{0} \times {T}_{2 b}} \times 1000$ ${R}_{tra} = {R}_{4} + {R}_{5} + {R}_{6}$
wherein, R₄ is a reluctance of the connecting side plate, R₅ is a reluctance of the connecting top plate, and R₆ is a reluctance of the connecting bottom plate.

6. The radial-nested-ring ultrasonic machining device according to claim 5, wherein an air-gap width is L mm; and the air-gap reluctance R_{δ} satisfies: ${R}_{δ} = {K}_{2} \times \left({R}_{7}+{R}_{8}\right)$
wherein, R₇ is an air-gap reluctance between the connecting top plate and the second annular top plate, R₈ is an air-gap reluctance between the connecting bottom plate and the second annular bottom plate, and K₂ is a reluctance correction coefficient, 0.2≤K₂≤3,
based on structural parameters of the transmitting magnet and the receiving magnet,
in response to that T₁ₐ<T₂ₐ, then T₇=T₁ₐ; in response to that T₁ₐ>T₂ₐ, then T₇=T₂ₐ; in response to that T_{1b}<T_{2b}, then T₈=T_{1b}; in response to that T_{1b}>T_{2b}, then T₈=T_{2b}; and R₇ and R₈ satisfy following equations: ${F}_{m} = 1 + \frac{L}{\sqrt{{10}^{- 3} \times 0.5 \times {D}_{3} \times {T}_{m} \times θ}} \times ln \left[\frac{{10}^{5} \times 2 \times \left({E}_{1}+{E}_{2}+L\right)}{L}\right]$ ${R}_{m} = \frac{1}{θ \times {u}_{0} \times a \times \left({β}_{m}-{γ}_{m}\right)} \times ln \left(\frac{\left|\frac{L - {β}_{m}}{L - {γ}_{m}}\right|}{\left(\left|\frac{- {β}_{m}}{- {γ}_{m}}\right|\right)}\right) \times \frac{7}{{F}_{m}} \times 1000$
wherein, m is equal to 7 or 8, and parameters β, γ, and a satisfy: ${β}_{m} = \frac{- {b}_{m} + \sqrt{{b}_{m}^{2} - 4 {ac}_{m}}}{2 a}$ ${γ}_{m} = \frac{- {b}_{m} - \sqrt{{b}_{m}^{2} - 4 {ac}_{m}}}{2 a}$ $a = 2 \times k$ ${b}_{m} = k \times {D}_{3} + {T}_{m}$ ${c}_{m} = \frac{1}{2} \times {D}_{3} \times {T}_{m}$ $k = \frac{{T}_{2 a} - {T}_{1 a}}{2 \times L}$
in response to that T₁ₐ=T₂ₐ, then T₇=T₁ₐ; in response to that T_{1b}=T_{2b}, then T₈=T_{1b}; and R₇ and R₈ satisfy following equations: ${F}_{m} = 1 + \frac{L}{\sqrt{{10}^{- 3} \times 0.5 \times {D}_{3} \times {T}_{m} \times θ}} \times ln \left[\frac{{10}^{5} \times 2 \times \left({E}_{1}+{E}_{2}+L\right)}{L}\right]$ ${R}_{m} = \frac{1}{θ \times {u}_{0} \times {T}_{m}} \times ln \left(\frac{{D}_{3} \times 0.5 + L}{{D}_{3} \times 0.5}\right) \times \frac{7}{{F}_{m}} \times 1000 .$

7. The radial-nested-ring ultrasonic machining device according to any one of claims 1 to 6, wherein the air-gap width is L mm, 0.1≤L≤3.

8. The radial-nested-ring ultrasonic machining device according to any one of claims 1 to 6, wherein an outer periphery of the tool body extends radially outward to form a first limiting member; the receiving unit comprises a rear end surface abutting against a front end surface of the first limiting member, and further comprises a front end surface connected to a second limiting member; the second limiting member is disposed around the tool body; and a second accommodating groove for accommodating the receiving unit is formed between the first limiting member and the second limiting member.

9. The radial-nested-ring ultrasonic machining device according to any one of claims 1 to 6, wherein the wireless transmission mechanism comprises a transmitting mount; the transmitting mount is disposed on the outer peripheral side of the tool body; an end surface of the transmitting mount facing the tool body is provided with a first accommodating groove; and the transmitting magnet is accommodated in the first accommodating groove.

10. The radial-nested-ring ultrasonic machining device according to any one of claims 1 to 6, wherein the tool body is internally provided with a mounting cavity; and the ultrasonic transducer is disposed in the mounting cavity.

11. The radial-nested-ring ultrasonic machining device according to any one of claims 1 to 6, further comprising a horn, wherein the ultrasonic transducer comprises a piezoelectric vibrator, a screw rod, and a rear cover; the screw rod is disposed in the tool body and extends along the axial direction of the tool body; a rear end of the horn is fixedly connected to the screw rod; the piezoelectric vibrator is sleeved on the screw rod; and the rear cover is threadedly connected to the screw rod and cooperates with a rear end surface of the horn to limit the piezoelectric vibrator.

12. The radial-nested-ring ultrasonic machining device according to claim 11, further comprising a collet sleeved on an outer periphery of a machining tool, and a nut, wherein a front end of the horn is provided with an insertion bore extending rearward; an inner peripheral surface of the insertion bore is tapered with a diameter gradually decreasing from front to rear; the collet is insertable together with the machining tool into the insertion bore; and the nut is configured to be threadedly connectable to the horn, and abuts against the collet to secure the machining tool.

13. The radial-nested-ring ultrasonic machining device according to claim 12, wherein the collet comprises a conical section cooperating with the insertion bore; the collet is provided with a plurality of first deformation grooves arranged at intervals along a circumferential direction of the collet; and the plurality of first deformation grooves extend to or through the conical section; and
the plurality of first deformation grooves penetrate through an outer side surface and an inner side surface of the collet; the plurality of first deformation grooves extend rearward from a front end surface of the collet along an axial direction of the collet, pass through the conical section, and extend toward a rear end surface of the collet; and a first gap is provided between a rear groove surface of each of the plurality of first deformation grooves and the rear end surface of the collet.

14. The radial-nested-ring ultrasonic machining device according to claim 13, wherein the collet is provided with a plurality of second deformation grooves arranged at intervals along the circumferential direction of the collet; the plurality of second deformation grooves extend to or through the conical section; and the plurality of second deformation grooves are spaced from and staggered with the plurality of first deformation grooves; and
a second gap is provided between a front groove surface of each of the plurality of second deformation grooves and the front end surface of the collet; and a rear groove surface of each of the plurality of second deformation grooves is flush with the rear end surface of the collet.

15. The radial-nested-ring ultrasonic machining device according to any one of claims 1 to 6, wherein the transmitting magnet is made of any one material selected from a group consisting of ferrite, neodymium iron boron, high-frequency ceramic material, powder metallurgy material, amorphous and nanocrystalline alloys, and cobalt iron; and the receiving magnet is made of any one material selected from a group consisting of ferrite, neodymium iron boron, high-frequency ceramic material, powder metallurgy material, amorphous and nanocrystalline alloys, and cobalt iron.

16. An ultrasonic spindle, comprising a first rotary output unit and the radial-nested-ring ultrasonic machining device according to any one of claims 1 to 15, wherein a rear end of the tool body is assembled to the first rotary output unit.

17. An ultrasonic machine tool, comprising a machine tool body and the ultrasonic spindle according to claim 16, wherein the ultrasonic spindle is mounted on the machine tool body.

18. An ultrasonic drill, comprising a housing, a second rotary output unit, a machining tool, a bearing, and the radial-nested-ring ultrasonic machining device according to any one of claims 1 to 6, wherein a front end surface of the housing is provided with an accommodating cavity extending rearward; a rear end of the tool body is accommodated in the accommodating cavity and connected to an output end of the second rotary output unit; and the tool body is connected to the housing via the bearing; the radial-nested-ring ultrasonic machining device is disposed in the accommodating cavity and connected to the housing; and the machining tool is connected to the ultrasonic transducer.
